# EUROPEAN PATENT APPLICATION

(11) **EP 4 790 480 A1**
(43) Date of publication of application: **12.08.2026**
(21) Application number: 24874435.1
(22) Date of filing: 10.09.2024
(51) Int. Cl.: G02F 1/03

(54) **SPATIAL PHASE MODULATION ELEMENT, SPATIAL PHASE MODULATOR, AND LIGHT MODULATOR**

(30) Priority: 06.10.2023 JP 2023174289
(71) Applicant: NIKON CORPORATION, Tokyo 140-8601 (JP)
(72) Inventor: OKAZAKI Masahide, Tokyo 140-8601 (JP)
(74) Representative: Viering, Jentschura & Partner mbB Patent- und Rechtsanwälte
(86) International application number: PCT/JP2024/032394
(87) International publication number: WO 2025/074823

(57) **Abstract**

In a spatial phase modulation element (50) capable of changing a phase of light that passes through an optical member (110) by generating a potential difference between a second electrode (130) and a first electrode (120) to change a refractive index of the optical member (110), a plurality of the second electrodes (130) is arranged in an array direction perpendicular to an extending direction of a second side surface (114), and potential differences between the second electrodes (130) and the first electrode (120) can be independently generated.

## Description

### TECHNICAL FIELD

The present invention relates to a spatial phase modulation element, a spatial phase modulator, and an optical modulator.

### TECHNICAL BACKGROUND

As a spatial phase modulation element, a spatial phase modulation element using a piston-type micromirror (see, for example, Patent literature 1), a spatial phase modulation element using a ferroelectric liquid crystal, and the like, are known. In such a spatial phase modulation element, there is a demand to change a phase of light with high accuracy at a high speed.

### PRIOR ARTS LIST

### PATENT DOCUMENT

Patent literature 1: US Patent No. 6965119

### SUMMARY OF THE INVENTION

A spatial phase modulation element according to the present invention includes an optical member formed using a ferroelectric material having translucency, a first electrode provided on a first side surface extending in a predetermined direction that connects an incident plane and an exit plane of light in the optical member, and a second electrode provided on a second side surface on an opposite side of the first side surface in the optical member, the spatial phase modulation element being capable of changing a phase of light that passes through the optical member by generating a potential difference between the second electrode and the first electrode to change a refractive index of the optical member, in which a plurality of the second electrodes is arranged in an array direction perpendicular to the predetermined direction, and the spatial phase modulation element is capable of independently generating a potential difference between each second electrode of the plurality of second electrodes and the first electrode.

A spatial phase modulator according to the present invention includes a plurality of the spatial phase modulation elements described above, in which the plurality of spatial phase modulation elements is arranged along a direction from the first side surface toward the second side surface.

### BRIEF DESCRIPTION OF THE DRAWINGS

FIG. 1 is a plan view of a spatial phase modulator;
FIG. 2 is a side view of the spatial phase modulator;
FIG. 3 is an exploded perspective view of a spatial phase modulation element;
FIG. 4 is a plan view of a spatial phase modulation element according to a first embodiment;
FIG. 5 is a cross-sectional view of the spatial phase modulation element according to the first embodiment;
FIG. 6 indicates graphs of a phase distribution of incident light, a phase distribution of emission light, and a distribution of a refractive index of an optical member in the spatial phase modulation element according to the first embodiment to compare with each other;
FIG. 7 indicates graphs of a light intensity distribution of the emission light and the phase distribution of the emission light in the spatial phase modulation element according to the first embodiment to compare with each other;
FIG. 8 is a plan view of a spatial phase modulation element according to a second embodiment;
FIG. 9 is a cross-sectional view of the spatial phase modulation element according to the second embodiment;
FIG. 10 indicates graphs of a phase distribution of incident light, a phase distribution of emission light, and a distribution of a refractive index of an optical member in the spatial phase modulation element according to the second embodiment to compare with each other;
FIG. 11 is a plan view of a spatial phase modulation element according to a third embodiment;
FIG. 12 is a cross-sectional view of the spatial phase modulation element according to the third embodiment;
FIG. 13 indicates graphs of a phase distribution of incident light, a phase distribution of emission light, and a distribution of a refractive index of an optical member in the spatial phase modulation element according to the third embodiment to compare with each other;
FIG. 14 is a plan view of a spatial phase modulation element according to a fourth embodiment;
FIG. 15 is a cross-sectional view of the spatial phase modulation element according to the fourth embodiment;
FIG. 16 indicates graphs of a phase distribution of incident light, a phase distribution of emission light, and a distribution of a refractive index of an optical member in the spatial phase modulation element according to the fourth embodiment to compare with each other;
FIG. 17 indicates graphs of a light intensity distribution of the emission light and the phase distribution of the emission light in the spatial phase modulation element according to the fourth embodiment to compare with each other;
FIG. 18 is a plan view of a spatial phase modulation element according to a fifth embodiment;
FIG. 19 is a cross-sectional view of the spatial phase modulation element according to the fifth embodiment;
FIG. 20 indicates graphs of a phase distribution of incident light, a phase distribution of emission light, and a distribution of a refractive index of an optical member in the spatial phase modulation element according to the fifth embodiment to compare with each other; and
FIG. 21 indicates graphs of a light intensity distribution of the emission light and the phase distribution of the emission light in the spatial phase modulation element according to the fifth embodiment to compare with each other.

### DESCRIPTION OF THE EMBODIMENTS

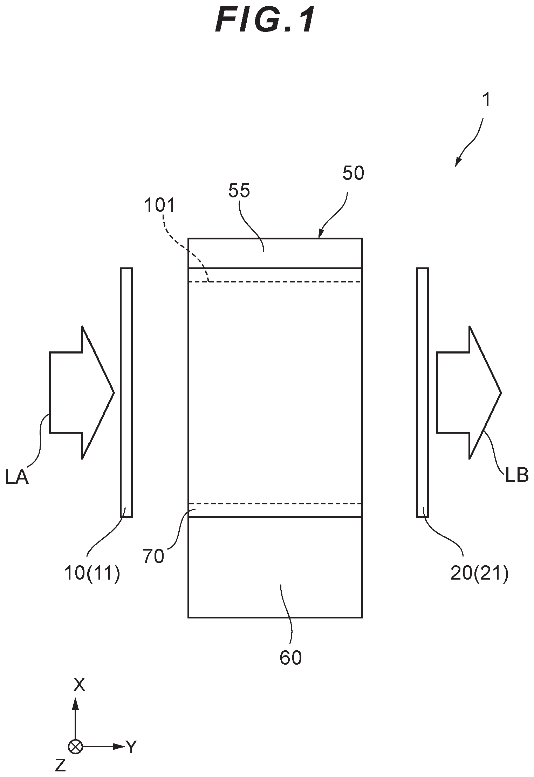

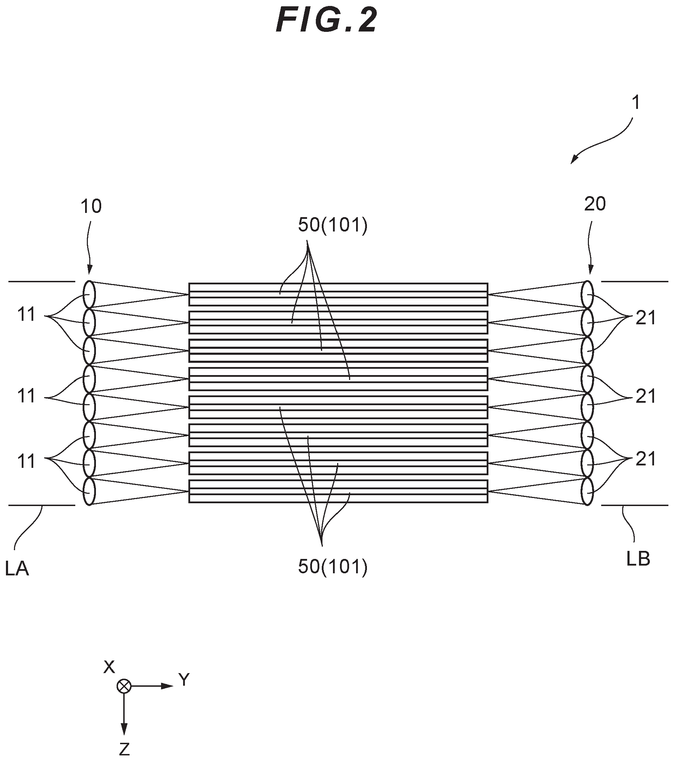

Preferred embodiments will be described below. First, a spatial phase modulator including a spatial phase modulation element according to each embodiment will be described using FIG. 1 and FIG. 2. In the description of the spatial phase modulator, directions indicated by respective arrows in FIG. 1 and FIG. 2 may be referred to as an X direction, a Y direction, and a Z direction. The X direction, the Y direction, and the Z direction are directions orthogonal to each other.

### [Spatial Phase Modulator]

As illustrated in FIG. 1 and FIG. 2, a spatial phase modulator 1 includes a first cylindrical lens array 10, a plurality of spatial phase modulation elements 50, and a second cylindrical lens array 20. As illustrated in FIG. 2, the first cylindrical lens array 10 includes a plurality of first cylindrical lenses 11 extending in the X direction. The plurality of first cylindrical lenses 11 is arranged in the Z direction while being aligned with the plurality of spatial phase modulation elements 50. Eight first cylindrical lenses 11 may be arranged side by side in the Z direction. The plurality of first cylindrical lenses 11 splits light that travels in the +Y direction and is incident on the first cylindrical lens array 10, in the Z direction and focuses the light.

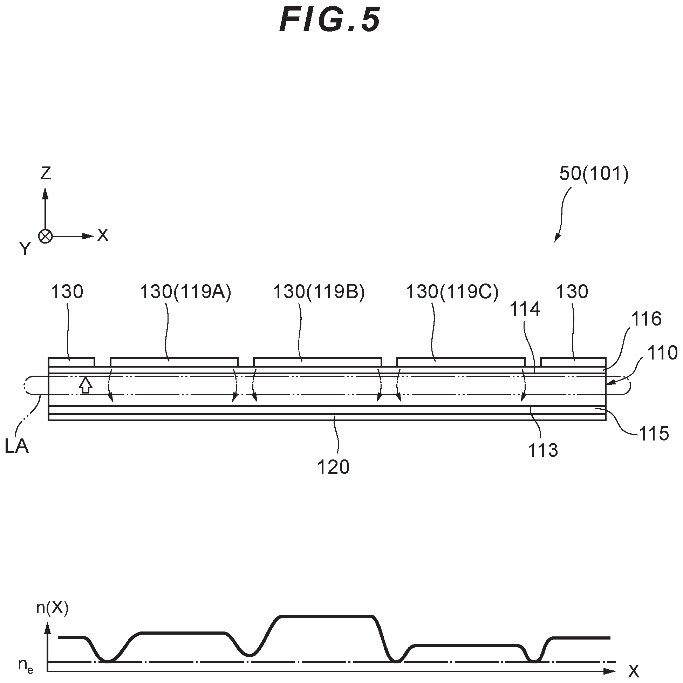

On the plurality of spatial phase modulation elements 50, a plurality of beams of incident light LA that has passed through the plurality of first cylindrical lenses 11 is incident. Hereinafter, the light incident on the plurality of spatial phase modulation elements 50 via the first cylindrical lens array 10 will be referred to as incident light LA. The incident light LA incident on the spatial phase modulation elements 50 has an oval cross-sectional shape in which a width in the Z direction is smaller than a width in the X direction (see, for example, FIG. 5). Note that the incident light LA having an oval cross-sectional shape incident on the spatial phase modulation elements 50 may be referred to as slit-like incident light LA. The plurality of spatial phase modulation elements 50 is arranged in the Z direction while being aligned with the plurality of first cylindrical lenses 11 in a state where the spatial phase modulation elements 50 are held by a holding member 55. In a case where eight first cylindrical lenses 11 are arranged side by side in the Z direction, eight spatial phase modulation elements 50 may be arranged side by side in the Z direction.

The spatial phase modulation elements 50 may be arranged at rear focus positions of the first cylindrical lenses 11. The spatial phase modulation elements 50 modulate a phase of light (incident light LA) incident on the spatial phase modulation elements 50 according to voltages applied to electrodes of the spatial phase modulation elements 50 and emit the phase-modulated light to the second cylindrical lens array 20. Details of the spatial phase modulation elements 50 will be described later. Hereinafter, the light emitted from the spatial phase modulation elements 50 will be referred to as emission light LB.

The second cylindrical lens array 20 includes a plurality of second cylindrical lenses 21 extending in the X direction. The plurality of second cylindrical lenses 21 is arranged in the Z direction while being aligned with the plurality of spatial phase modulation elements 50. In a case where eight first cylindrical lenses 11 (and eight spatial phase modulation elements 50) are arranged side by side in the Z direction, eight second cylindrical lenses 21 may be arranged side by side in the Z direction. A plurality of beams of the emission light LB emitted from the plurality of spatial phase modulation elements 50 is incident on the plurality of second cylindrical lenses 21. The plurality of second cylindrical lenses 21 makes the plurality of beams of the emission light LB emitted from the plurality of spatial phase modulation elements 50 parallel.

The spatial phase modulator 1 configured as described above is, for example, used in a microscope (not illustrated) or laser processing machine (not illustrated). The spatial phase modulator 1 to be used in a microscope, for example, modulates a phase of light (incident light LA) from a sample which is received via an objective lens and corrects phase shift of the light from the sample. The spatial phase modulator 1 to be used in laser processing machine, for example, modulates a phase of light (incident light LA) from a light source with which a workpiece is irradiated and corrects phase shift of the light from the light source.

In the spatial phase modulator 1, light that has passed through the first cylindrical lens array 10 is split into a plurality of beams of the incident light LA by the plurality of first cylindrical lenses 11 and incident on the plurality of spatial phase modulation elements 50. The spatial phase modulation elements 50 modulate a phase of the light (incident light LA) incident on the spatial phase modulation elements 50 according to voltages applied to the electrodes of the spatial phase modulation elements 50 and emit the phase-modulated light to the second cylindrical lens array 20. The plurality of beams of the emission light LB emitted from the plurality of spatial phase modulation elements 50 passes through the plurality of second cylindrical lenses 21 in the second cylindrical lens array 20 to become parallel light. According to such a spatial phase modulator 1, as a result of the plurality of spatial phase modulation elements 50 being arranged in the Z direction (from a first side surface toward a second side surface of an optical member which will be described later), the phase of light can be modulated in a two-dimensional direction (XZ direction). Further, as a result of the spatial phase modulator 1 including the spatial phase modulation elements 50 which will be described below, it is possible to change the phase of light (incident light LA) incident on the spatial phase modulator 1 with high accuracy at a high speed.

### [First Embodiment]

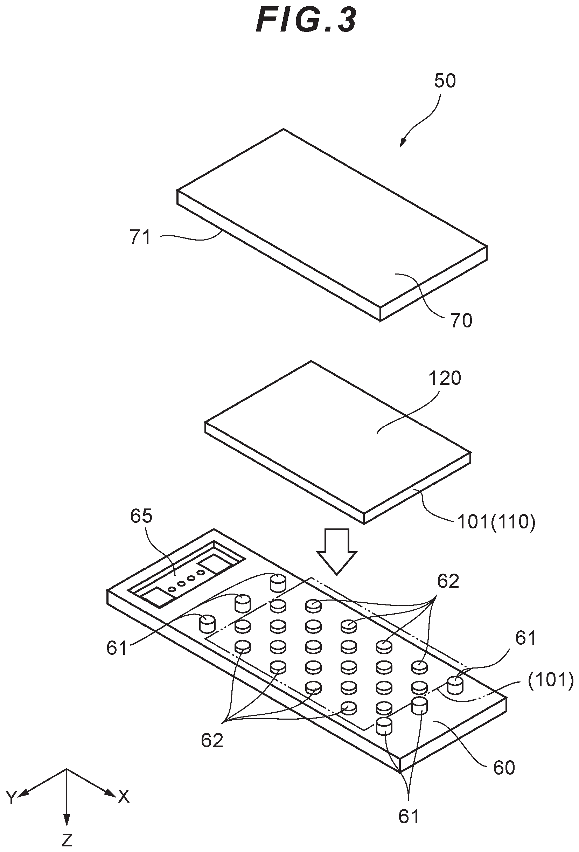

The spatial phase modulation element 50 according to a first embodiment will be described next. As illustrated in FIG. 3, the spatial phase modulation element 50 according to the first embodiment includes a wiring substrate 60, a holding substrate 70, and a modulation element body 101. In the first embodiment, directions indicated by respective arrows in FIG. 3 may be referred to as an X direction, a Y direction, and a Z direction. The X direction, the Y direction, and the Z direction are directions orthogonal to each other.

The wiring substrate 60 is formed in a plate shape extending in the XY direction so as to match outer peripheral shapes of the modulation element body 101 and the holding substrate 70. On the wiring substrate 60, the modulation element body 101 and the holding substrate 70 are arranged in a superimposed manner in this order. On a surface on a side facing the modulation element body 101 in the wiring substrate 60, a plurality of first probes 61, a plurality of second probes 62, and a connector portion 65 are provided. The first probes 61 are arranged with the second probes 62 located therebetween. The first probes 61 are bonded and electrically connected to a bonding surface 71 formed on the holding substrate 70. The first probes 61 are grounded via a cable (not illustrated) connected to the connector portion 65. Note that a surface of the wiring substrate 60 faces a lower surface of the modulation element body 101 by being aligned with each other. Most part of components of each of the plurality of first probes 61 may be embedded into the wiring substrate 60. Further, the whole part of components of each of the plurality of second probes 62 may be embedded into the wiring substrate 60.

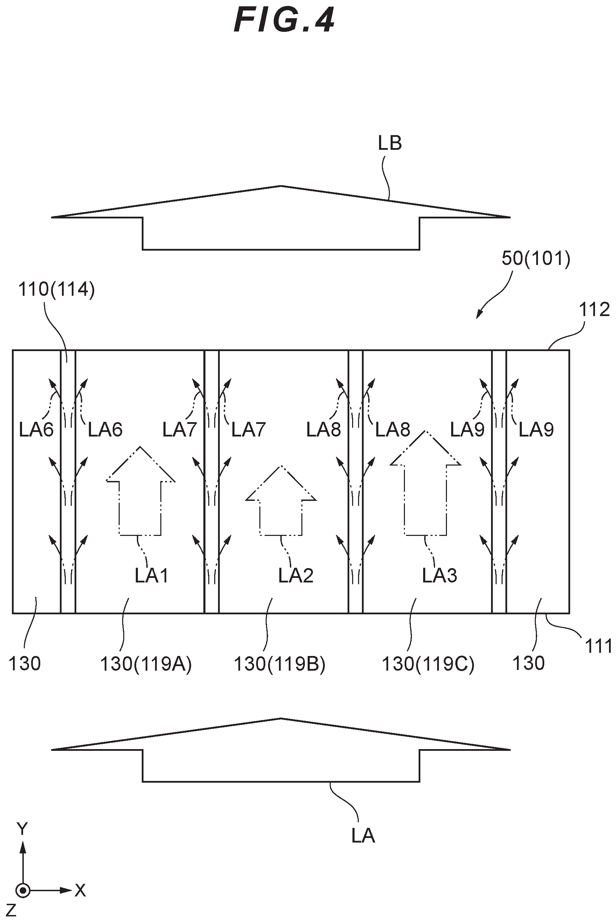

The second probes 62 are arranged to face the modulation element body 101. The second probes 62 are bonded and electrically connected to a plurality of second electrodes 130 (see FIG. 4 and FIG. 5) of the modulation element body 101. The second probes 62 are electrically connected to a drive circuit (not illustrated) via a cable (not illustrated) connected to the connector portion 65. Voltages to be applied to a plurality of second electrodes 130 of the modulation element body 101 are independently controlled according to voltages to be supplied from the drive circuit via the wiring substrate 60 (the second probes 62).

The connector portion 65 is arranged on an end portion side of the wiring substrate 60, which does not face the modulation element body 101 and the holding substrate 70. The connector portion 65 is electrically connected to the first probes 61 and the second probes 62. The connector portion 65 is mated with and connected to a connector of a cable (not illustrated) electrically connected to a control substrate described above.

The holding substrate 70 is formed in a plate shape extending in the XY direction so as to match an outer peripheral shape of the modulation element body 101. On a surface of the holding substrate 70, facing the modulation element body 101, the bonding surface 71 to which a metal film having conductivity is vapor-deposited is formed. The bonding surface 71 of the holding substrate 70 is bonded to the first electrode 120 (see also FIG. 5) of the modulation element body 101 via the metal film. Further, the holding substrate 70 is formed overwrapping the modulation element body 101 while projecting more widely in ±X direction than the modulation element body 101. An overwrapped portion on the bonding surface 71 of the holding substrate 70, projecting from the modulation element body 101 is bonded to the first probes 61 of the wiring substrate 60 via the metal film. By this means, the first electrode 120 of the modulation element body 101 is grounded via the first probes 61 of the wiring substrate 60.

As illustrated in FIG. 4 and FIG. 5, the modulation element body 101 includes an optical member 110, the first electrode 120, and the plurality of second electrodes 130. The modulation element body 101 modulates a phase of slit-like incident light LA formed to have a flat oval cross-sectional shape and emits the phase-modulated light.

The optical member 110 is formed in a flat cuboid shape using a ferroelectric material having translucency. Note that a ferroelectric substance is a type of a dielectric and refers to an optical crystal in which electric dipoles are aligned even if there is no electric field outside, and directions of the dipoles can be changed by the electric field. Examples of the ferroelectric material having translucency can include, for example, lithium niobate, lithium tantalate, MgO doped lithium niobate (MgO:LN), MgO doped stoichiometric lithium tantalate (MgO:SLT), and the like. An incident plane 111 is formed at one (-Y direction) of end portions of the optical member 110. The slit-like incident light LA (having an oval cross-sectional shape) that travels in the +Y direction is incident on the incident plane 111 as incident light. At an end portion on an opposite side (+Y direction) of the incident plane 111 in the optical member 110, an exit plane 112 is formed. The light incident on an inside of the optical member 110 from the incident plane 111 is emitted from the exit plane 112.

On the first side surface 113 extending from the incident plane 111 to the exit plane 112 in the optical member 110, the first electrode 120 is provided. The first electrode 120 is, for example, formed using a metal material including gold (Au). The first electrode 120 is formed to extend over the entire first side surface 113. A first insulating layer 115 is formed between the first side surface 113 and the first electrode 120. The first insulating layer 115 is formed using, for example, silicon dioxide (SiO₂). A thickness of the first insulating layer 115 is set to be thicker than a leakage amount of an evanescent wave generated when the light undergoes total internal reflection on the first side surface 113. This can prevent part of light that passes through an inside of the optical member 110 from being absorbed in the first electrode 120.

On a second side surface 114 on the opposite side (+Z direction side) of the first side surface 113 in the optical member 110, the second electrode 130 is provided. The second electrode 130 is, for example, formed using a metal material including gold (Au). A plurality of the second electrodes 130 is arranged in an array direction (X direction) perpendicular to an extending direction of the second side surface 114. Note that an extending direction of the first side surface 113, which connects the incident plane 111 and the exit plane 112 may be referred to as a predetermined direction. A plurality of the second electrodes 130 may be arranged in an array direction (X direction) perpendicular to the predetermined direction. The plurality of second electrodes 130 is formed to extend in parallel in the Y direction from one end side to the other end side of the second side surface 114. A second insulating layer 116 is formed between the second side surface 114 and the plurality of second electrodes 130. The second insulating layer 116 is, for example, formed using silicon dioxide (SiO₂). A thickness of the second insulating layer 116 is set to be thicker than a leakage amount of an evanescent wave generated when light undergoes total internal reflection on the second side surface 114. This can prevent part of light that passes through the inside of the optical member 110 from being absorbed in the second electrodes 130.

The plurality of second electrodes 130 is electrically connected to the plurality of second probes 62 on the wiring substrate 60 grouped for each respective second electrode 130. As described above, the plurality of second probes 62 is electrically connected to a drive circuit (not illustrated). The plurality of second probes 62 grouped for each respective second electrode 130 independently applies voltages supplied from the drive circuit to the plurality of second electrodes 130. By applying voltages to the second electrodes 130 via the second probes 62, it is possible to provide potential differences between the second electrodes 130 and the first electrode 120 arranged across the optical member 110.

In the modulation element body 101 of the spatial phase modulation element 50 configured as described above, as illustrated in FIG. 4 and FIG. 5, on the incident plane 111 of the optical member 110, slit-like incident light LA (having an oval cross-sectional shape) is incident as the incident light. If positive voltages are applied to the second electrodes 130, potential differences are generated between the second electrodes 130 and the first electrode 120 arranged across the optical member 110, and electric fields from the second electrodes 130 toward the first electrode 120 are generated inside the optical member 110.

As described above, the optical member 110 is formed using a ferroelectric material having translucency. In FIG. 5, a direction (crystal orientation) of polarization in the optical member 110 is schematically indicated by a thick arrow. The direction of polarization in the optical member 110 is a direction (+Z direction) from the first side surface 113 toward the second side surface 114. By this means, in a process of the electric fields being directed from the second electrodes 130 to the first electrode 120, a refractive index inside the optical member 110 changes in an increasing trend by an electro-optic effect.

By generating the electric fields inside the optical member 110 to change the refractive index inside the optical member 110, it is possible to change a phase of the light (incident light LA) that passes through the inside of the optical member 110. The modulation element body 101 of the spatial phase modulation element 50 modulates the phase of the light (incident light LA) incident on the incident plane 111 of the optical member 110 by potential differences between the second electrodes 130 and the first electrode 120 and emits the emission light LB from the exit plane 112. In the first embodiment, it is possible to independently change the potential difference between each second electrode 130 of the plurality of second electrodes 130 and the first electrode 120. The potential differences between the second electrodes 130 and the first electrode 120 occur in a thickness direction of the optical member 110, so that it is possible to decrease voltages (drive voltages) to be applied to the second electrodes 130. It is therefore possible to change the phase of the light (incident light LA) incident on the optical member 110 with high accuracy at a high speed without placing a burden on a drive circuit (not illustrated).

Further, by gaps being provided between the second electrodes 130, the electric fields from the second electrodes 130 are difficult to reach portions located at the gaps between the second electrodes 130 in the optical member 110, and the refractive index less changes. By this means, the refractive indexes of the portions located at the gaps between the second electrodes 130 in the optical member 110 become relatively lower than the refractive indexes of the portions at which the second electrodes 130 are arranged in the optical member 110. Thus, the light incident on the portions located at the gaps between the second electrodes 130 in the optical member 110 can be made incident on the portions at which the second electrodes 130 are arranged in the optical member 110. It is therefore possible to utilize 100% of the incident light LA, so that it is possible to increase utilization efficiency of the incident light LA.

By changing the refractive index of the inside of the optical member 110 by utilizing the electro-optic effect, it is possible to change the phase of the light (incident light LA) that passes through the inside of the optical member 110 at a high speed. Specifically, it is possible to change the refractive index of the inside of the optical member 110 with a low voltage from about several volts to several tens of volts. For example, if it is designed to apply voltages of about 10 volts to the second electrodes 130, a frequency for changing the refractive index of the inside of the optical member 110 can be made about several tens of megahertz. Further, if it is designed to apply voltages of about 35 volts to the second electrodes 130, a frequency for changing the refractive index of the inside of the optical member 110 can be made about several megahertz.

Note that a phase difference ϕe generated by application of the voltage can be obtained through calculation as described below. Note that it is assumed that an electro-optic crystal (ferroelectric material) constituting the optical member 110 has crystal orientation capable of applying voltages in the Z direction. A distance between electrodes is set as g, a length (interaction distance with light) of a crystal (in the Y direction) is set as L, and a wavelength of the light is set as λ. The phase difference ϕe generated by application of the voltage is expressed with the following expression (1).
[Math. 1]${ϕ}_{e} = \frac{2 π}{λ} \times {Δn}_{e} \times L$

In expression (1), Δnₑ is change of the refractive index generated by application of the voltage. A voltage to be applied to the electrode is set as Vₑ, an electro-optic coefficient (Pockels coefficient) of the electro-optic crystal is set as r₃₃, and the refractive index of the electro-optic crystal is set as nₑ. The change Δnₑ of the refractive index generated by application of the voltage is expressed with the following expression (2).
[Math. 2]${Δn}_{e} = - \frac{1}{2} \times {{n}_{e}}^{3} \times {r}_{33} \times \frac{{V}_{e}}{g}$

For example, in a crystal of lithium niobate (LiNbO₃) that is a typical electro-optic crystal, r₃₃ = 30.8 pm/V (where λ = 633 nm). It is assumed here that λ = 633 nm, nₑ = 2.19, r₃₃ = 30.8 pm/V, Vₑ = -35V, g = 200 µm, and L = 20 mm. Note that concerning the voltage Vₑ to be applied to the electrode, a sign in a case where a voltage is applied in an opposite direction (-Z direction) to the electro-optic crystal is set as negative (-). In this case, Δnₑ = 1.21E-05, and ϕe ≈ 138°.

A graph indicated in FIG. 5 indicates a distribution of the refractive index of the optical member 110. A horizontal axis of the graph indicated in FIG. 5 indicates an X-direction position in the optical member 110. A vertical axis of the graph indicated in FIG. 5 indicates the refractive index n(X) of the optical member 110 with respect to the X-direction position. nₑ indicates the refractive index of the optical member 110 (electro-optic crystal) in a state where a voltage is not applied to the electrode. Further, a region in which the second electrode 130 is arranged on a -X direction side in the optical member 110 will be referred to as a first region 119A in the optical member 110. A region in which the second electrode 130 is arranged on the central side in the optical member 110 will be referred to as a second region 119B in the optical member 110. A region in which the second electrode 130 on a +X direction side is arranged in the optical member 110 will be referred to as a third region 119C in the optical member 110.

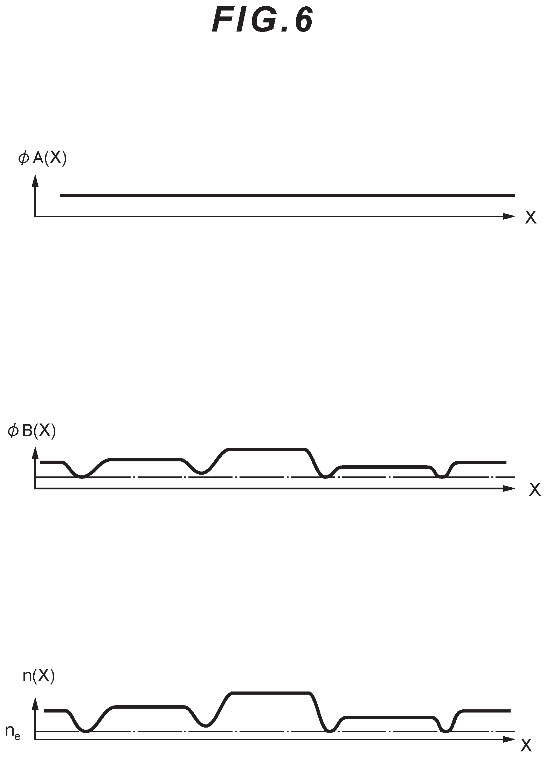

FIG. 6 indicates graphs of a phase distribution of the incident light LA, a phase distribution of the emission light LB, and a distribution of a refractive index of the optical member 110 to compare with each other. A horizontal axis of the graph indicating the phase distribution of the incident light LA indicates the X-direction position in the incident light LA. A vertical axis of the graph indicating the phase distribution of the incident light LA indicates a phase ϕA(X) of the incident light LA with respect to the X-direction position. To facilitate description, it is assumed that a wavefront of the incident light LA is a flat surface, and the phase distribution of the incident light LA is constant. A horizontal axis of the graph indicating the phase distribution of the emission light LB indicates the X-direction position in the emission light LB. A vertical axis of the graph indicating the phase distribution of the emission light LB indicates a phase ϕB(X) of the emission light LB with respect to the X-direction position. The graph indicating the distribution of the refractive index of the optical member 110 is the same as the graph indicated in FIG. 5.

As described above, it is possible to independently change the potential difference between each second electrode 130 of the plurality of second electrodes 130 and the first electrode 120. As can be seen from the graph indicating the distribution of the refractive index of the optical member 110 in FIG. 5 and FIG. 6, the refractive index of the first region 119A, the refractive index of the second region 119B, and the refractive index of the third region 119C in the optical member 110 independently change depending on the potential difference between each second electrode 130 of the plurality of second electrodes 130 and the first electrode 120. For example, in the first region 119A, in a process of the electric fields being directed from the second electrodes 130 to the first electrode 120, the refractive index of the first region 119A changes in an increasing trend by the electro-optic effect. In the second region 119B, in a process of the electric fields being directed from the second electrodes 130 to the first electrode 120, the refractive index of the second region 119B changes in an increasing trend by the electro-optic effect. In the third region 119C, in a process of the electric fields being directed from the second electrodes 130 to the first electrode 120, the refractive index of the third region 119C changes in an increasing trend by the electro-optic effect.

Further, at portions located at gaps between the second electrodes 130 in the optical member 110, the electric fields from the second electrodes 130 are difficult to reach, and the refractive index less changes. In other words, the refractive index nₑ of the optical member 110 less changes from the refractive index in a state where a voltage is not applied to the electrode. As a result of this, the refractive index of the portions located at the gaps between the second electrodes 130 in the optical member 110 becomes relatively lower than the refractive index of the portions at which the second electrodes 130 are arranged in the optical member 110.

Thus, as can be seen from the graph indicating the phase distribution of the emission light LB in FIG. 6, for example, a phase of light LA1 incident on the first region 119A changes according to the refractive index of the first region 119A. A phase of light LA2 incident on the second region 119B changes according to the refractive index of the second region 119B. A phase of light LA3 incident on the third region 119C changes according to the refractive index of the third region 119C. This makes it possible to change the phase of the light (incident light LA) incident on the optical member 110 with high accuracy and at a high speed.

Further, for example, light LA6 incident on a portion of a gap adjacent to the first region 119A on the -X direction side can be made incident on the first region 119A (or a region on an opposite side of the first region 119A). Light LA7 incident on a portion of a gap between the first region 119A and the second region 119B can be made incident on the first region 119A or the second region 119B. Light LA8 incident on a portion of a gap between the second region 119B and the third region 119C can be made incident on the second region 119B or the third region 119C. Light LA9 incident on a portion of a gap adjacent to the third region 119C on the +X direction side can be made incident on the third region 119C (or a region on an opposite side of the third region 119C). This can increase utilization efficiency of the incident light LA.

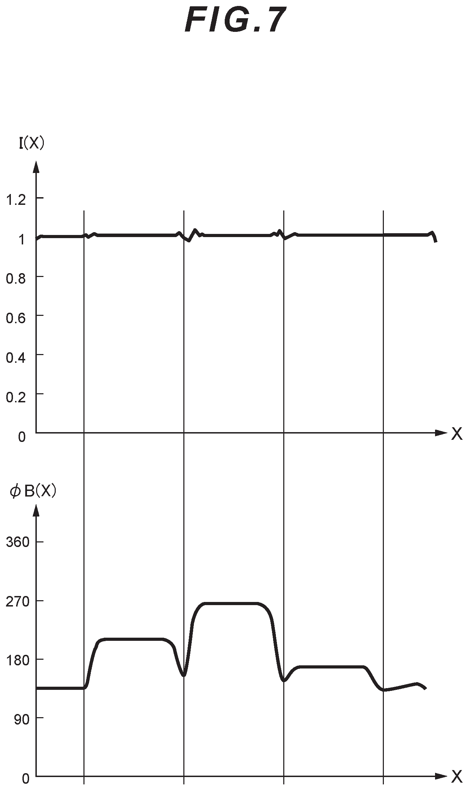

FIG. 7 indicates graphs of a light intensity distribution of the emission light LB and the phase distribution of the emission light LB to compare with each other. The graphs indicated in FIG. 7 indicate a specific example in a case where the optical member 110 is formed using lithium niobate (LiNbO₃). A horizontal axis of the graph indicating the light intensity distribution of the emission light LB indicates the X-direction position in the emission light LB. A vertical axis of the graph indicating the light intensity distribution of the emission light LB indicates light intensity I(X) (the unit is arbitrary) of the emission light LB with respect to the X-direction position. A horizontal axis of the graph indicating the phase distribution of the emission light LB indicates the X-direction position in the emission light LB (the unit is mm). A vertical axis of the graph indicating the phase distribution of the emission light LB indicates a phase ϕB(X) (the unit is degree (°)) of the emission light LB with respect to the X-direction position.

Further, a thickness (crystal thickness) of the optical member 110 is set at 0.2 mm. A length (interaction distance) in the Y direction of the optical member 110 is set at 20 mm. A pitch between the second electrodes 130 is set at 1 mm. A width of the second electrode 130 is set at 0.9 mm. A voltage application direction is set at the Z direction. A voltage to be applied to the second electrode 130 in the first region 119A is set at 9 V, a voltage to be applied to the second electrode 130 in the second region 119B is set at 15 V, and a voltage to be applied to the second electrode 130 in the third region 119C is set at 4.5 V. A wavelength of the incident light is set at 633 nm. It is assumed that the incident light is a Gaussian beam diffracted by a slit having a thickness of 100 µm (1/e²).

Further, long vertical lines in the graph indicated in FIG. 7 indicate central positions in the X direction of the gaps between the second electrodes 130. It can be seen from FIG. 7 that light intensity less fluctuates among the first to the third regions 119A to 119C, and connection of phase change is favorable.

### [Feature Configuration of First Embodiment]

The spatial phase modulation element 50 according to the first embodiment includes the first electrode 120 provided on the first side surface 113 in the optical member 110, and the plurality of second electrodes 130 provided on the second side surface 114 on an opposite side of the first side surface 113 in the optical member 110, and is capable of independently generating a potential difference between each second electrode 130 of the plurality of second electrodes 130 and the first electrode 120. The potential differences between the second electrodes 130 and the first electrode 120 occur in a thickness direction of the optical member 110, so that it is possible to decrease voltages (drive voltages) to be applied to the second electrodes 130. It is therefore possible to change the phase of the light (incident light LA) incident on the optical member 110 with high accuracy at a high speed without placing a burden on the drive circuit (not illustrated).

Further, a gap is provided between the second electrodes 130. By this means, as described above, the refractive index of the portions located at the gaps between the second electrodes 130 in the optical member 110 becomes relatively lower than the refractive index of the portions at which the second electrodes 130 are arranged in the optical member 110. Thus, the light incident on the portions located at the gaps between the second electrodes 130 in the optical member 110 can be made incident on the portions at which the second electrodes 130 are arranged in the optical member 110. It is therefore possible to utilize 100% of the incident light LA, so that it is possible to increase the utilization efficiency of the incident light LA.

In the first embodiment described above, the optical member 110 may include a slab waveguide provided so that the light (incident light LA) incident from the incident plane 111 passes through the inside of the optical member 110.

While in the first embodiment described above, the first electrode 120 is formed to extend over the entire first side surface 113, the present invention is not limited to this. For example, a plurality of the first electrodes may be arranged at portions located on an opposite side of the second electrodes 130 on the first side surface 113 in an array direction (X direction) that is the same as the array direction of the second electrodes 130.

### [Second Embodiment]

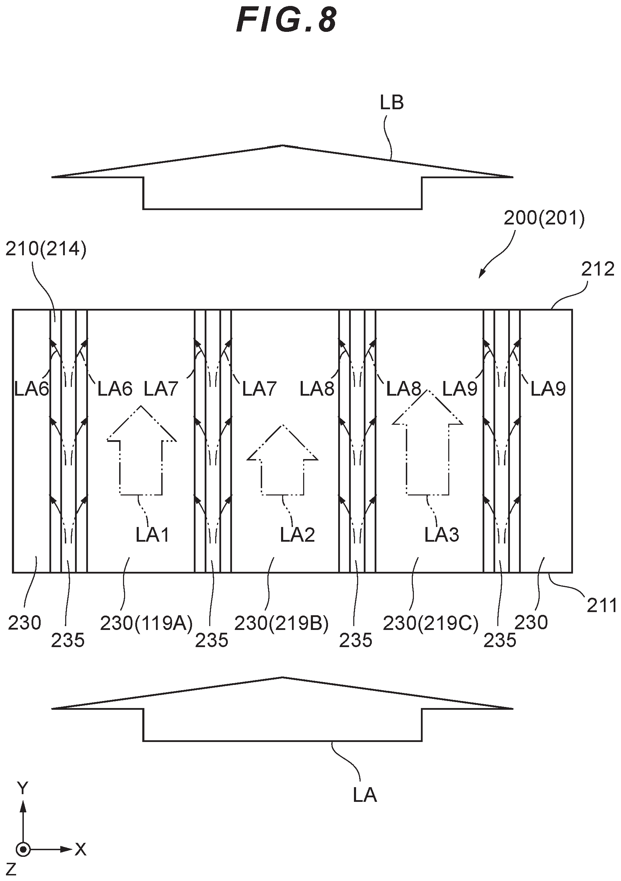

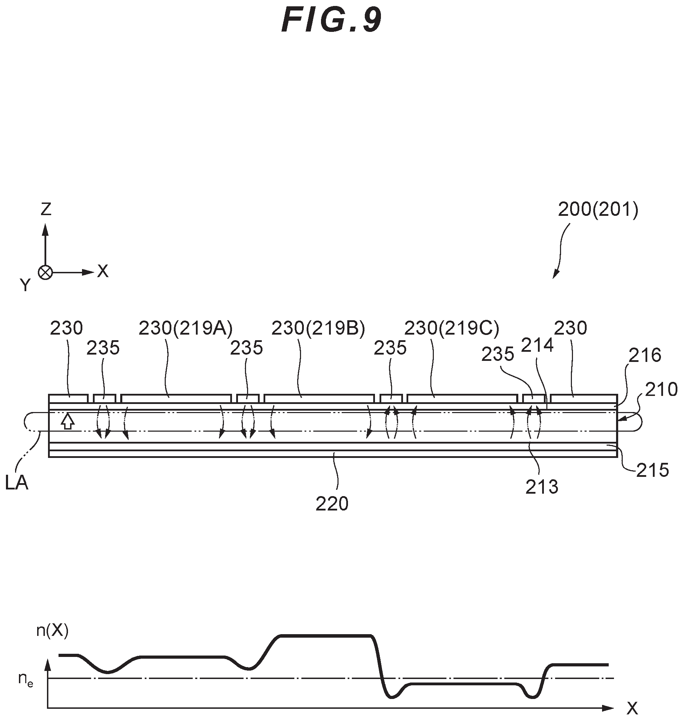

Next, a spatial phase modulation element according to a second embodiment will be described. The spatial phase modulation element according to the second embodiment has a configuration similar to the configuration of the spatial phase modulation element 50 according to the first embodiment except the modulation element body. Thus, in the second embodiment, only the modulation element body of the spatial phase modulation element will be described. As illustrated in FIG. 8 and FIG. 9, a modulation element body 201 of a spatial phase modulation element 200 according to the second embodiment includes an optical member 210, a first electrode 220, a plurality of second electrodes 230, and a plurality of third electrodes 235 capable of independently applying voltages. The modulation element body 201 modulates a phase of slit-like incident light LA formed to have a flat oval cross-sectional shape and emits the phase-modulated light.

In the second embodiment, directions indicated by respective arrows in FIG. 8 and FIG. 9 may be referred to as an X direction, a Y direction, and a Z direction. The X direction, the Y direction, and the Z direction are directions orthogonal to each other.

The optical member 210 is formed in a similar manner to the optical member 110 according to the first embodiment. An incident plane 211 is formed at one end portion (in the -Y direction) of the optical member 210. The slit-like incident light LA (having an oval cross-sectional shape) that travels in the +Y direction is incident on the incident plane 211 as the incident light. An exit plane 212 is formed at an end portion (in the +Y direction) on an opposite side of the incident plane 211 in the optical member 210. Light incident on an inside of the optical member 210 from the incident plane 211 is emitted from the exit plane 212.

A first electrode 220 is provided on a first side surface 213 extending from the incident plane 211 to the exit plane 212 in the optical member 210. The first electrode 220 is formed in a similar manner to the first electrode 120 according to the first embodiment. A first insulating layer 215 is formed between the first side surface 213 and the first electrode 220. The first insulating layer 215 is formed in a similar manner to the first insulating layer 115 according to the first embodiment.

A second electrode 230 is provided on a second side surface 214 on an opposite side (+Z direction side) of the first side surface 213 in the optical member 210. The second electrode 230 is formed in a similar manner to the second electrode 130 according to the first embodiment. A plurality of the second electrodes 230 is arranged in an array direction (X direction) perpendicular to an extending direction of the second side surface 214. Note that an extending direction of the first side surface 213, which connects the incident plane 211 and the exit plane 212 may be referred to as a predetermined direction. The plurality of second electrodes 230 may be arranged in an array direction (X direction) perpendicular to the predetermined direction.

Third electrodes 235 are respectively provided in gaps between the second electrodes 230 on the second side surface 214. The third electrode 235 is, for example, formed to have a width narrower than a width of the second electrode 230 using a metal material including gold (Au). The third electrodes 235 are formed to extend in parallel to the second electrodes 230 in the Y direction from one end side to the other end side of the second side surface 214.

A second insulating layer 216 is formed between the second side surface 214, and the plurality of second electrodes 230 and the plurality of third electrodes 235. The second insulating layer 216 is formed in a similar manner to the second insulating layer 116 according to the first embodiment.

The plurality of second electrodes 230 and the plurality of third electrodes 235 are electrically connected to a plurality of second probes 62 on a wiring substrate 60 grouped for each respective second electrode 230 and third electrode 235. As described above, the plurality of second probes 62 is electrically connected to a drive circuit (not illustrated). The plurality of second probes 62 respective each second electrode 230 and third electrode 235 independently applies voltages supplied from the drive circuit to the plurality of second electrodes 230 and the plurality of third electrodes 235. By the voltages being applied to the second electrodes 230 via the second probes 62, potential differences can be provided between the second electrodes 230 and the first electrode 220 arranged across the optical member 210. Further, by the voltages being applied to the third electrodes 235 via the second probes 62, potential differences can be provided between the third electrodes 235 and the first electrode 220 arranged across the optical member 210.

In the modulation element body 201 of the spatial phase modulation element 200 configured as described above, as illustrated in FIG. 8 and FIG. 9, the slit-like incident light LA (having an oval cross-sectional shape) is incident on the incident plane 211 of the optical member 210 as the incident light. If positive voltages are applied to the second electrodes 230, potential differences occur between the second electrodes 230 and the first electrode 220 arranged across the optical member 210, and electric fields from the second electrodes 230 toward the first electrode 220 are generated inside the optical member 210. On the other hand, if negative voltages are applied to the second electrodes 230, potential differences occur between the second electrodes 230 and the first electrode 220 arranged across the optical member 210, and electric fields from the first electrode 220 toward the second electrodes 230 are generated inside the optical member 210.

Further, if positive voltages are applied to the third electrodes 235, potential differences occur between the third electrodes 235 and the first electrode 220 arranged across the optical member 210, and electric fields from the third electrodes 235 toward the first electrode 220 are generated inside the optical member 210. On the other hand, if negative voltages are applied to the third electrodes 235, potential differences occur between the third electrodes 235 and the first electrode 220 arranged across the optical member 210, and electric fields from the first electrode 220 toward the third electrodes 235 are generated inside the optical member 210.

As described above, the optical member 210 is formed using a ferroelectric material having translucency. In FIG. 9, a direction (crystal orientation) of polarization in the optical member 210 is schematically indicated by a thick arrow. The direction of the polarization in the optical member 210 is directed from the first side surface 213 to the second side surface 214 (+Z direction). By this means, in a process of the electric fields being directed from the second electrodes 230 to the first electrode 220, the refractive index of the portions at which the second electrodes 230 are arranged in the optical member 210 changes in an increasing trend by the electro-optic effect. On the other hand, in a process of the electric fields being directed from the first electrode 220 to the second electrodes 230, the refractive index of the portions at which the second electrodes 230 are arranged in the optical member 210 changes in a decreasing trend by the electro-optic effect.

Further, in a process of the electric fields being directed from the third electrodes 235 to the first electrode 220, the refractive index of the portions located at the gaps between the second electrodes 230 in the optical member 210 changes in an increasing trend by the electro-optic effect. On the other hand, in a process of the electric fields being directed from the first electrode 220 to the third electrodes 235, the refractive index of the portions located at the gaps between the second electrodes 230 in the optical member 210 changes in a decreasing trend by the electro-optic effect.

By generating the electric fields inside of the optical member 210 to change the refractive index of the inside of the optical member 210, the phase of the light (incident light LA) that passes through the inside of the optical member 210 can be changed. The modulation element body 201 of the spatial phase modulation element 200 modulates the phase of the light (incident light LA) incident on the incident plane 211 of the optical member 210 by the potential differences between the second electrodes 230 and the first electrode 220 (and the potential differences between the third electrodes 235 and the first electrode 220) and emits the emission light LB from the exit plane 212. In the second embodiment, the potential differences between the second electrodes 230 and the first electrode 220 can be independently changed. The potential differences between the second electrodes 230 and the first electrode 220 occur in a thickness direction of the optical member 210, so that it is possible to decrease the voltages (drive voltages) to be applied to the second electrodes 230. It is therefore possible to change the phase of the light (incident light LA) incident on the optical member 210 with high accuracy at a high speed without placing a burden on a drive circuit (not illustrated).

Further, the third electrodes 235 are provided at the gaps between the second electrodes 230 on the second side surface 214, and the potential differences between the third electrodes 235 and the first electrode 220 can be independently changed. By generating the electric fields from the first electrode 220 to the third electrodes 235 to lower the refractive index of the portions located at the gaps between the second electrodes 230 in the optical member 210, the light incident on the portions located at the gaps between the second electrodes 230 in the optical member 210 can be made incident on the portions at which the second electrodes 230 are arranged in the optical member 210. It is therefore possible to utilize 100% of the incident light LA, so that it is possible to increase the utilization efficiency of the incident light LA. Further, by lowering the refractive index of the portions located at the gaps between the second electrodes 230 in the optical member 210, the refractive index of the portions at which the second electrodes 230 are arranged in the optical member 210 can be made lower, so that it is possible to expand a range in which the phase of the light (incident light LA) incident on the optical member 210 can be changed while increasing the utilization efficiency of the incident light LA.

The graph indicated in FIG. 9 indicates a distribution of the refractive index of the optical member 210. A horizontal axis and a vertical axis of the graph indicated in FIG. 9 are similar to the horizontal axis and the vertical axis of the graph indicated in FIG. 5. Further, a region in which the second electrode 230 on the -X direction side is arranged in the optical member 210 will be referred to as a first region 219A in the optical member 210. A region in which the second electrode 230 on a central side in the optical member 210 is arranged will be referred to as a second region 219B in the optical member 210. A region in which the second electrode 230 on the +X direction side in the optical member 210 will be referred to as a third region 219C in the optical member 210.

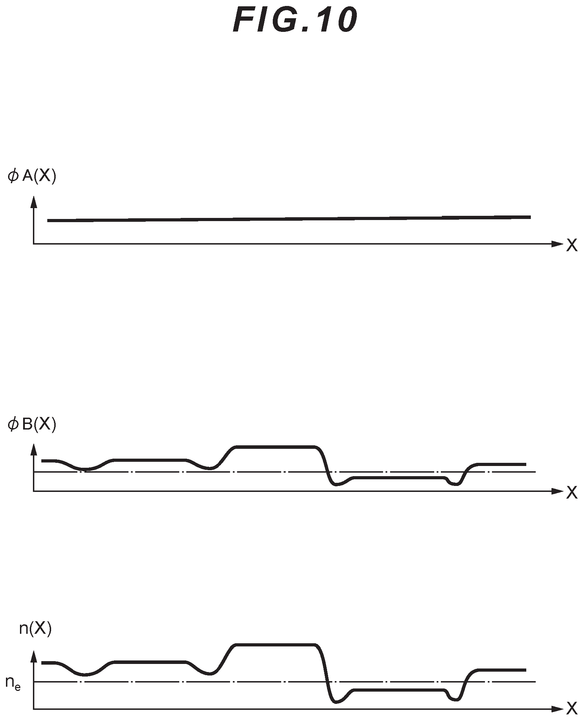

FIG. 10 indicates graphs of a phase distribution of the incident light LA, a phase distribution of the emission light LB, and a distribution of a refractive index of the optical member 210 to compare with each other. A horizontal axis and a vertical axis of the graphs indicating the phase distribution of the incident light LA are the same as the horizontal axis and the vertical axis of the graph indicating the phase distribution of the incident light LA in FIG. 6. To facilitate description, it is assumed that a wavefront of the incident light LA is a flat surface, and the phase distribution of the incident light LA is constant. A horizontal axis and a vertical axis of the graph indicating the phase distribution of the emission light LB are the same as the horizontal axis and the vertical axis of the graph indicating the phase distribution of the emission light LB in FIG. 6. The graph indicating the distribution of the refractive index of the optical member 210 is the same as the graph indicated in FIG. 9.

As described above, the potential differences between the second electrodes 230 and the first electrode 220 can be independently changed. As can be seen from the graph indicating the distribution of the refractive index of the optical member 210 in FIG. 9 and FIG. 10, the refractive index of the first region 219A, the refractive index of the second region 219B, and the refractive index of the third region 219C in the optical member 210 independently change depending on the potential difference between each second electrode 230 of the plurality of second electrodes 230 and the first electrode 220. For example, in the first region 219A, in a process of the electric fields being directed from the second electrodes 230 to the first electrode 220, the refractive index of the first region 219A changes in an increasing trend by the electro-optic effect. In the second region 219B, in a process of the electric fields being directed from the second electrodes 230 to the first electrode 220, the refractive index of the second region 219B changes in an increasing trend by the electro-optic effect. In the third region 219C, in a process of the electric fields being directed from the first electrode 220 to the second electrodes 230, the refractive index of the third region 219C changes in a decreasing trend by the electro-optic effect.

Further, the potential differences between the third electrodes 235 and the first electrode 220 can be independently changed. For example, in a portion of a gap between the first region 219A and the second region 219B, in a process of the electric fields being directed from the third electrodes 235 to the first electrode 220, the refractive index of the portion of the gap between the first region 219A and the second region 219B changes in an increasing trend by the electro-optic effect to such an extent that it does not exceed the refractive indexes of the first region 219A and the second region 219B. In a portion of a gap between the second region 219B and the third region 219C, in a process of the electric fields being directed from the first electrode 220 to the third electrodes 235, the refractive index of the portion of the gap between the second region 219B and the third region 219C changes in a decreasing trend by the electro-optic effect so as to be lower than the refractive indexes of the second region 219B and the third region 219C.

Thus, as can be seen from the graph indicating the phase distribution of the emission light LB in FIG. 10, for example, a phase of light LA1 incident on the first region 219A changes according to the refractive index of the first region 219A. A phase of light LA2 incident on the second region 219B changes according to the refractive index of the second region 219B. A phase of light LA3 incident on the third region 219C changes according to the refractive index of the third region 219C. This makes it possible to change the phase of the light (incident light LA) incident on the optical member 210 with high accuracy at a higher speed.

Further, for example, light LA6 incident on a portion of a gap adjacent to the first region 219A on the -X direction side can be made incident on the first region 219A (or a region on an opposite side of the first region 219A). Light LA7 incident on a portion of the gap between the first region 219A and the second region 219B can be made incident on the first region 219A or the second region 219B. Light LA8 incident on a portion of the gap between the second region 219B and the third region 219C can be made incident on the second region 219B or the third region 219C. Light LA9 incident on a portion of the gap adjacent to the third region 219C on the +X direction side can be made incident on the third region 219C (or a region on an opposite side of the third region 219C). This can increase the utilization efficiency of the incident light LA.

### [Feature Configuration of Second Embodiment]

The spatial phase modulation element 200 according to the second embodiment includes the first electrode 220 provided on the first side surface 213 in the optical member 210, and the plurality of second electrodes 230 provided on the second side surface 214 on an opposite side of the first side surface 213 in the optical member 210, and is capable of independently generating a potential difference between each second electrode 230 of the plurality of second electrodes 230 and the first electrode 220. The potential differences between the second electrodes 230 and the first electrode 220 occur in a thickness direction of the optical member 210, so that it is possible to decrease the voltages (drive voltages) to be applied to the second electrodes 230. It is therefore possible to change the phase of the light (incident light LA) incident on the optical member 210 with high accuracy at a high speed without placing a burden on a drive circuit (not illustrated).

Further, the third electrodes 235 are provided at gaps between the second electrodes 230 on the second side surface 214, and the potential differences between the third electrodes 235 and the first electrode 220 can be independently changed. By this means, by lowering the refractive index of the portions located at the gaps between the second electrodes 230 in the optical member 210, the light incident on the portions located at the gaps between the second electrodes 230 in the optical member 210 can be made incident on the portions at which the second electrodes 230 are arranged in the optical member 210. It is therefore possible to utilize 100% of the incident light LA, so that it is possible to increase the utilization efficiency of the incident light LA. Further, by lowering the refractive index of the portions located at the gaps between the second electrodes 230 in the optical member 210, the refractive index of the portions at which the second electrodes 230 are arranged in the optical member 210 can be made lower, so that it is possible to expand a range in which the phase of the light (incident light LA) incident on the optical member 210 can be changed while increasing the utilization efficiency of the incident light LA.

In the second embodiment described above, the optical member 210 may include a slab waveguide provided so that the light (incident light LA) incident from the incident plane 211 passes through the inside of the optical member 210.

While in the second embodiment described above, the first electrode 220 is formed to extend over the entire first side surface 213, the present invention is not limited to this. For example, a plurality of the first electrodes may be arranged at portions located on the opposite side of the second electrodes 230 on the first side surface 213 and at portions located on the opposite side of the third electrodes 235 on the first side surface 213 in an array direction (X direction) that is the same as the array direction of the second electrodes 230 (or the third electrodes 235).

### [Third Embodiment]

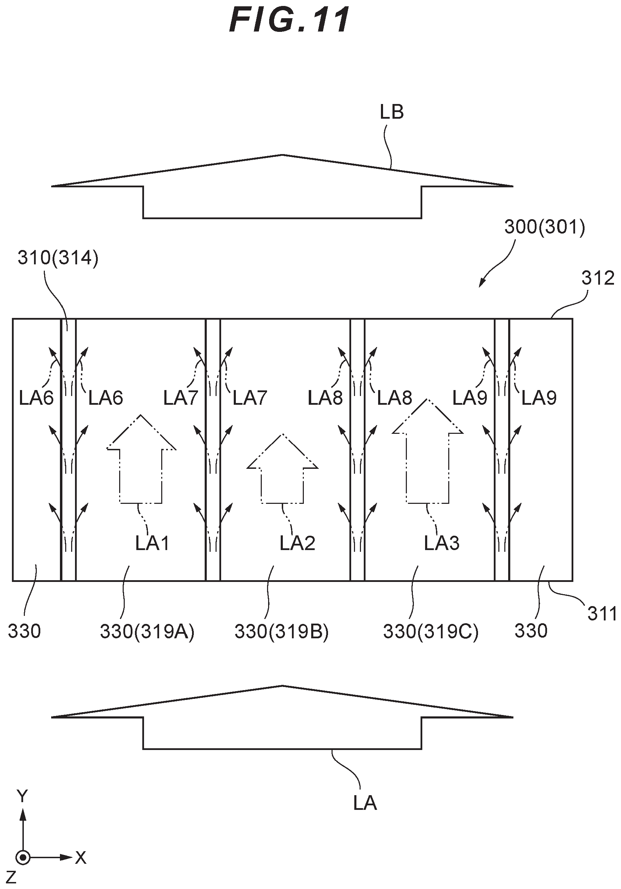

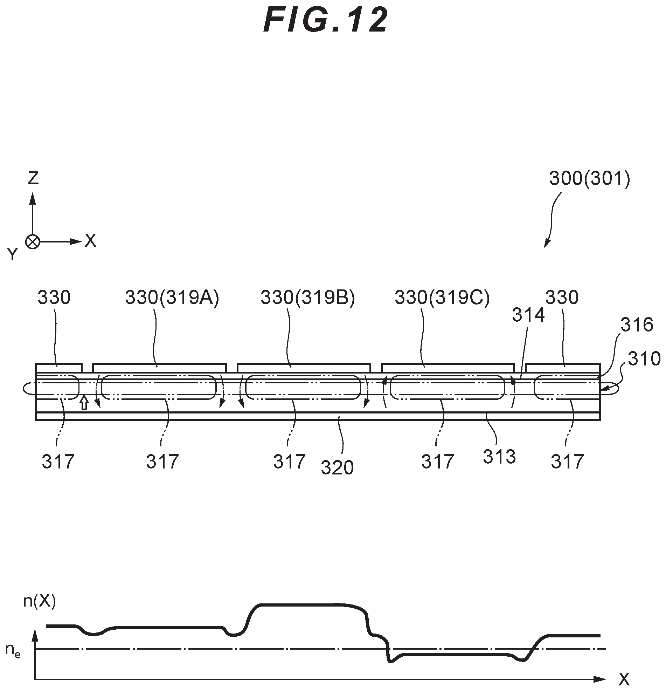

Next, a spatial phase modulation element according to a third embodiment will be described. The spatial phase modulation element according to the third embodiment has a configuration similar to the configuration of the spatial phase modulation element 50 according to the first embodiment except the modulation element body. Thus, in the third embodiment, only the modulation element body of the spatial phase modulation element will be described. As illustrated in FIG. 11 and FIG. 12, a modulation element body 301 of a spatial phase modulation element 300 according to the third embodiment includes an optical member 310, a first electrode 320, and a plurality of second electrodes 330. The modulation element body 301 modulates a phase of slit-like incident light LA formed to have a flat oval cross-sectional shape and emits the phase-modulated light.

In the third embodiment, directions indicated by respective arrows in FIG. 11 and FIG. 12 may be referred to as an X direction, a Y direction, and a Z direction. The X direction, the Y direction, and the Z direction are direction orthogonal to each other.

The optical member 310 is formed in a flat cuboid shape using a ferroelectric material having translucency. An incident plane 311 is formed at one end portion (in the -Y direction) of the optical member 310. Slit-like incident light LA (having an oval cross-sectional shape) that travels in the +Y direction is incident on the incident plane 311 as the incident light. An exit plane 312 is formed at an end portion (in the +Y direction) on the opposite side of the incident plane 311 in the optical member 310. Light incident on the inside the optical member 310 from the incident plane 311 is emitted from the exit plane 312.

A first electrode 320 is provided on a first side surface 313 extending from the incident plane 311 to the exit plane 312 in the optical member 310. The first electrode 320 is formed in a similar manner to the first electrode 120 according to the first embodiment.

A second electrode 330 is provided on a second side surface 314 on the opposite side (+Z direction side) of the first side surface 313 in the optical member 310. The second electrode 330 is formed in a similar manner to the second electrode 130 according to the first embodiment. A plurality of the second electrodes 330 is arranged in an array direction (X direction) perpendicular to an extending direction of the second side surface 314. Note that an extending direction of the first side surface 313, which connects the incident plane 311 and the exit plane 312 may be referred to as a predetermined direction. The plurality of second electrodes 330 may be arranged in an array direction (X direction) perpendicular to the predetermined direction. An insulating layer 316 is formed between the second side surface 314 and the plurality of second electrodes 330. The insulating layer 316 is formed in a similar manner to the second insulating layer 116 according to the first embodiment.

An optical waveguide 317 extending from the incident plane 311 to the exit plane 312 is provided in each of the portions between the second electrodes 330 and the first electrode 320 inside the optical member 310. The optical waveguide 317 may be formed using a proton-exchange method. The optical waveguide 317 may be formed using a metal diffusion method using a metal such as titanium (Ti) and copper (Cu). Note that the optical waveguide 317 may be referred to as a channel optical waveguide. The adjacent optical waveguides 317 among a plurality of the optical waveguides 317 are formed apart from each other by a distance corresponding to equal to or more than a leakage amount of an evanescent wave generated when light undergoes total internal reflection at each optical waveguide 317. Further, the adjacent optical waveguides 317 may be formed apart by a length of the gap between the second electrodes 330. A refractive index of the optical waveguide 317 is higher than a refractive index of portions located at the gaps between the second electrodes 330 in the optical member 310.

The plurality of second electrodes 330 is electrically connected to the plurality of second probes 62 on the wiring substrate 60 grouped for each respective second electrode 330. As described above, the plurality of second probes 62 is electrically connected to a drive circuit (note illustrated). The plurality of second probes 62 grouped for each respective second electrode 330 independently applies voltages supplied from the drive circuit to the plurality of second electrodes 330. By the voltages being applied to the second electrodes 330 via the second probes 62, optical differences can be provided between the second electrodes 330 and the first electrode 320 arranged across the optical member 310.

In the modulation element body 301 of the spatial phase modulation element 300 configured as described above, as illustrated in FIG. 11 and FIG. 12, slit-like incident light LA (having an oval cross-sectional shape) is incident on the incident plane 311 of the optical member 310 as the incident light. If positive voltages are applied to the second electrodes 330, potential differences occur between the second electrodes 330 and the first electrode 320 arranged across the optical member 310, and electric fields from the second electrodes 330 toward the first electrode 320 are generated inside the optical member 310. On the other hand, if negative voltages are applied to the second electrodes 330, potential differences occur between the second electrodes 330 and the first electrode 320 arranged across the optical member 310, and electric fields from the first electrode 320 toward the second electrodes 330 are generated inside the optical member 310.

As described above, the optical member 310 is formed using a ferroelectric material having translucency. In FIG. 12, a direction (crystal orientation) of polarization in the optical member 310 is schematically indicated by a thick arrow. The direction of the polarization in the optical member 310 is directed from the first side surface 313 to the second side surface 314 (+Z direction). By this means, in a process of the electric fields being directed from the second electrodes 330 to the first electrode 320, a refractive index of the portions at which the second electrodes 330 are arranged in the optical member 310, that is, the optical waveguides 317 changes in an increasing trend by the electro-optic effect. On the other hand, in a process of the electric fields being directed from the first electrode 320 to the second electrodes 330, the refractive index of the optical waveguides 317 in the optical member 310 changes in a decreasing trend by the electro-optic effect.

By generating the electric fields inside the optical member 310 to change the refractive index of the inside of the optical member 310, it is possible to change the phase of the light (incident light LA) that passes through the inside of the optical member 310. The modulation element body 301 of the spatial phase modulation element 300 modulates the phase of the light (incident light LA) incident on the incident plane 311 of the optical member 310 by the potential differences between the second electrodes 330 and the first electrode 320 and emits the emission light LB from the exit plane 312. In the third embodiment, it is possible to independently change the potential difference between each second electrode 330 of the plurality of second electrodes 330 and the first electrode 320. The potential differences between the second electrodes 330 and the first electrode 320 occur in a thickness direction of the optical member 310, so that it is possible to decrease voltages (drive voltages) to be applied to the second electrodes 330. It is therefore possible to change the phase of the light (incident light LA) incident on the optical member 310 with high accuracy at a higher speed without placing a burden on a drive circuit (not illustrated).

Further, the refractive index of the optical waveguides 317 in the optical member 310 is higher than the refractive index of the portions located at the gaps between the second electrodes 330 in the optical member 310. By this means, the light incident on the portions located at the gaps between the second electrodes 330 in the optical member 310 can be made incident on the portions at which the second electrodes 330 are arranged in the optical member 310, that is, the optical waveguides 317. It is therefore possible to utilize 100% of the incident light LA, so that it is possible to increase the utilization efficiency of the incident light LA. Further, the refractive index of the optical waveguides 317 in the optical member 310 is higher than the refractive index of the portions located at the gaps between the second electrodes 330 in the optical member 310, so that it is possible to expand a range in which the phase of the light (incident light LA) incident on the optical member 310 can be changed while increasing the utilization efficiency of the incident light LA.

The graph indicated in FIG. 12 indicates a distribution of the refractive index of the optical member 310. A horizontal axis and a vertical axis of the graph indicated in FIG. 12 are similar to the horizontal axis and the vertical axis of the graph indicated in FIG. 5. Further, a region in which the second electrode 330 on the -X direction side is arranged in the optical member 310 will be referred to as a first region 319A in the optical member 310. A region in which the second electrode 330 on the central side is arranged in the optical member 310 will be referred to as a second region 319B in the optical member 310. A region in which the second electrode 330 on the +X direction side is arranged in the optical member 310 will be referred to as a third region 319C in the optical member 310.

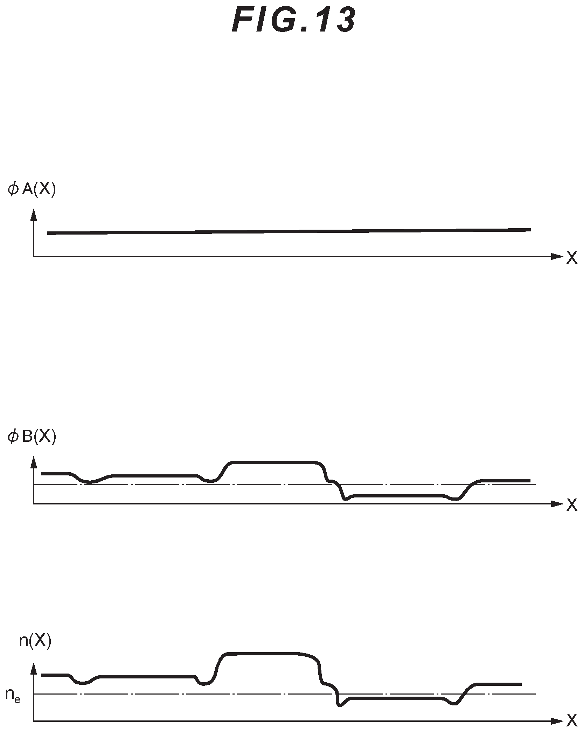

FIG. 13 indicates graphs of a phase distribution of the incident light LA, a phase distribution of the emission light LB, and a distribution of the refractive index of the optical member 310 to compare with each other. A horizontal axis and a vertical axis of the graph indicating the phase distribution of the incident light LA are the same as the horizontal axis and the vertical axis of the graph indicating the phase distribution of the incident light LA in FIG. 6. To facilitate the description, it is assumed that a wavefront of the incident light LA is a flat surface, and the phase distribution of the incident light LA is constant. A horizontal axis and a vertical axis of the graph indicating the phase distribution of the emission light LB are the same as the horizontal axis and the vertical axis of the graph indicating the phase distribution of the emission light LB in FIG. 6. The graph indicating the distribution of the refractive index of the optical member 310 is the same as the graph indicated in FIG. 12.

As described above, it is possible to independently change the potential difference between each second electrode 330 of the plurality of second electrodes 330 and the first electrode 320. As can be seen from the graph indicating the distribution of the refractive index of the optical member 310 in FIG. 12 and FIG. 13, the refractive index of the first region 319A, the refractive index of the second region 319B, and the refractive index of the third region 319C in the optical member 310 independently change depending on the potential difference between each second electrode 330 of the plurality of second electrodes 330 and the first electrode 320. For example, in the first region 319A, in a process of the electric fields being directed from the second electrodes 330 to the first electrode 320, the refractive index of the first region 319A changes in an increasing trend by the electro-optic effect. In the second region 319B, in a process of the electric fields being directed from the second electrodes 330 to the first electrode 320, the refractive index of the second region 319B changes in an increasing trend by the electro-optic effect. In the third region 319C, in a process of the electric fields being directed from the first electrode 320 to the second electrodes 330, the refractive index of the third region 319C changes in a decreasing trend by the electro-optic effect.

Further, the refractive index of the optical waveguides 317 in the optical member 310 is higher than the refractive index of the portions located at the gaps between the second electrodes 330 in the optical member 310. By this means, the light incident on the portions located at the gaps between the second electrodes 330 in the optical member 310 can be made incident on the portions at which the second electrodes 330 are arranged in the optical member 310, that is, the optical waveguides 317.

Thus, as can be seen from the graph indicating the phase distribution of the emission light LB in FIG. 13, for example, a phase of light LA1 incident on the first region 319A changes according to the refractive index of the first region 319A. A phase of light LA2 incident on the second region 319B changes according to the refractive index of the second region 319B. A phase of light LA3 incident on the third region 319C changes according to the refractive index of the third region 319C. This makes it possible to change the phase of the light (incident light LA) incident on the optical member 310 with high accuracy at a high speed.

Further, for example, light LA6 incident on a portion of a gap adjacent to the first region 319A on the -X direction side can be made incident on the first region 319A (or a region on an opposite side of the first region 319A). Light LA7 incident on a portion of a gap between the first region 319A and the second region 319B can be made incident on the first region 319A or the second region 319B. Light LA8 incident on a portion of a gap between the second region 319B and the third region 319C can be made incident on the second region 319B or the third region 319C. Light LA9 incident on a portion of a gap adjacent to the third region 319C on the +X direction side can be made incident on the third region 319C (or a region on the opposite side of the third region 319C). This makes it possible to increase the utilization efficiency of the incident light LA.

### [Feature Configuration of Third Embodiment]

The spatial phase modulation element 300 according to the third embodiment includes the first electrode 320 provided on the first side surface 313 in the optical member 310, and the plurality of second electrodes 330 provided on the second side surface 314 on the opposite side of the first side surface 313 in the optical member 310 and is capable of independently generating the potential difference between each second electrode 330 of the plurality of second electrodes 330 and the first electrode 320. The potential differences between the second electrodes 330 and the first electrode 320 occur in a thickness direction of the optical member 310, so that it is possible to decrease voltages (drive voltages) to be applied to the second electrodes 330. It is therefore possible to change the phase of the light (incident light LA) incident on the optical member 310 with high accuracy at a high speed without placing a burden on a drive circuit (not illustrated).

Further, the refractive index of the optical waveguides 317 in the optical member 310 is higher than the refractive index of the portions located at the gaps between the second electrodes 330 in the optical member 310. By this means, the light incident on the portions located at the gaps between the second electrodes 330 in the optical member 310 can be made incident on the portions at which the second electrodes 330 are arranged in the optical member 310, that is, the optical waveguides 317. It is therefore possible to utilize 100% of the incident light LA, so that it is possible to increase the utilization efficiency of the incident light LA. Further, the refractive index of the optical waveguides 317 in the optical member 310 is higher than the refractive index of the portions located at the gaps between the second electrodes 330 in the optical member 310, so that it is possible to expand a range in which the phase of the light (incident light LA) incident on the optical member 310 can be changed while increasing the utilization efficiency of the incident light LA.

While in the third embodiment described above, the first electrode 320 is formed to extend over the entire first side surface 313, the present invention is not limited to this. For example, a plurality of the first electrodes may be arranged at portions located on the opposite side of the second electrodes 330 on the first side surface 313 in an array direction (X direction) that is the same as the array direction of the second electrodes 330.

### [Fourth Embodiment]

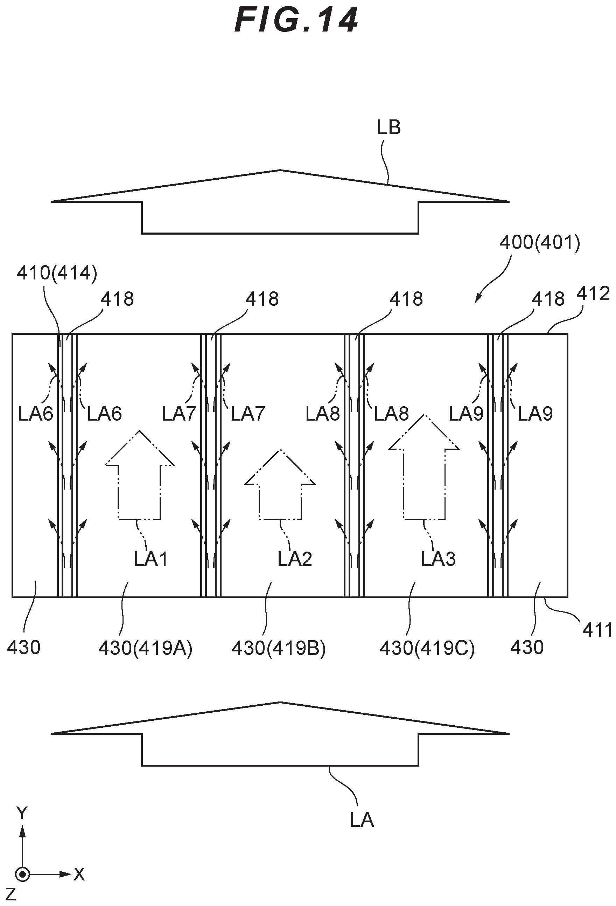

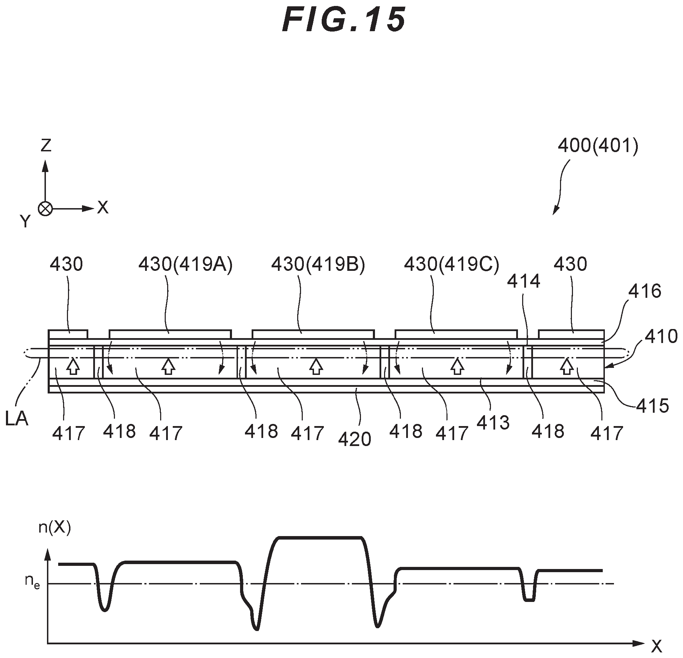

Next, a spatial phase modulation element according to a fourth embodiment will be described. The spatial phase modulation element according to the fourth embodiment has a configuration similar to the configuration of the spatial phase modulation element 50 according to the first embodiment except the modulation element body. Thus, in the fourth embodiment, only the modulation element body of the spatial phase modulation element will be described. As illustrated in FIG. 14 and FIG. 15, a modulation element body 401 of the spatial phase modulation element 400 according to the fourth embodiment includes an optical member 410, a first electrode 420, and a plurality of second electrodes 430. The modulation element body 401 modulates a phase of slit-like incident light LA formed to have a flat oval cross-sectional shape and emits the phase-modulated light.

In the fourth embodiment, directions indicated by respective arrows in FIG. 14 and FIG. 15 may be referred to as an X direction, a Y direction, and a Z direction. The X direction, the Y direction, and the Z direction are directions orthogonal to each other.

The optical member 410 is formed in a flat cuboid shape using a ferroelectric material having translucency. An incident plane 411 is formed at one end portion (in the -Y direction) of the optical member 410. The slit-like incident light LA (having an oval cross-sectional shape) that travels in the +Y direction is incident on the incident plane 411 as the incident light. An exit plane 412 is formed at an end portion (in the +Y direction) on an opposite side of the incident plane 411 in the optical member 410. Light incident on the inside of the optical member 410 from the incident plane 411 is emitted from the exit plane 412.

A first electrode 420 is provided on a first side surface 413 extending from the incident plane 411 to the exit plane 412 in the optical member 410. The first electrode 420 is formed in a similar manner to the first electrode 120 according to the first embodiment. A first insulating layer 415 is formed between the first side surface 413 and the first electrode 420. The first insulating layer 415 is formed in a similar manner to the first insulating layer 115 according to the first embodiment.

A second electrode 430 is provided on a second side surface 414 on an opposite side (+Z direction side) of the first side surface 413 in the optical member 410. The second electrode 430 is formed in a similar manner to the second electrode 130 according to the first embodiment. A plurality of the second electrodes 430 is arranged in an array direction (X direction) perpendicular to an extending direction of the second side surface 414. Note that an extending direction of the first side surface 413, which connects the incident plane 411 and the exit plane 412 may be also referred to as a predetermined direction. The plurality of second electrodes 430 may be arranged in an array direction (X direction) perpendicular to the predetermined direction. A second insulating layer 416 is formed between the second side surface 414 and the plurality of second electrodes 430. The second insulating layer 416 is formed in a similar manner to the second insulating layer 116 according to the first embodiment.

The optical member 410 has a polarization reversal structure. In the optical member 410, a plurality of first polarization portions 417 extending in the Y direction, and a plurality of second polarization portions 418 extending in the Y direction adjacent to the first polarization portions 417 are alternately provided along the X direction (the array direction that is the same as the array direction of the second electrodes 430). The second polarization portions 418 polarize in a direction (specifically, an opposite direction) different from a polarization direction of the first polarization portions 417. To provide a polarization reversal structure in the optical member 410, a direction of polarization of portions corresponding to the second polarization portions 418 is inverted by 180° with respect to the optical member having uniform polarization (dielectric polarization) formed in a cuboid shape. For example, in a case where a known method called an "electric field application method" is used, the direction of polarization of the second polarization portions 418 is inverted by attaching electrodes to portions corresponding to the second polarization portions 418 and applying a voltage of equal to or greater than a certain level (also referred to as a polarization reversal voltage or a coercive electric field) . Note that a direction of polarization of the first polarization portions 417 may be inverted instead of the direction of polarization of the second polarization portions 418.

A first electrode 420 is provided across portions at which the first polarization portions 417 are located and portions at which the second polarization portions 418 are located on the first side surface 413. Further, second electrodes 430 are respectively provided at portions at which the first polarization portions 417 are located on the second side surface 414. At the portions at which the first polarization portions 417 are located on the second side surface 414, the second electrodes 430 are formed to extend in parallel in the Y direction from one end side to the other end side of the first polarization portions 417.

The plurality of second electrodes 430 is electrically connected to a plurality of second probes 62 on a wiring substrate 60 grouped for each respective second electrode 430. As described above, the plurality of second probes 62 is electrically connected to a drive circuit (not illustrated). The plurality of second probes 62 grouped for each respective second electrode 430 independently applies voltages supplied from the drive circuit to the plurality of second electrodes 430. By the voltages being applied to the second electrodes 430 via the second probes 62, potential differences can be provided between the second electrodes 430 and the first electrode 420 arranged across the optical member 410.

In the modulation element body 401 of the spatial phase modulation element 400 configured as described above, as illustrated in FIG. 14 and FIG. 15, slit-like incident light LA (having an oval cross-sectional shape) is incident on the incident plane 411 of the optical member 410 as the incident light. If positive voltages are applied to the second electrodes 430, potential differences occur between the second electrodes 430 and the first electrode 420 arranged across the optical member 410, and electrical fields from the second electrodes 430 toward the first electrode 420 are generated inside the optical member 410.

As described above, the optical member 410 has a polarization reversal structure. In FIG. 15, a direction of polarization (crystal orientation) in the first polarization portions 417 of the optical member 410 is schematically indicated by a thick arrow. The direction of the polarization in the first polarization portions 417 is a direction (+Z direction) from the first side surface 413 toward the second side surface 414. By this means, in a process of the electric fields being directed from the second electrodes 430 to the first electrode 420, a refractive index of the first polarization portions 417 at which the second electrodes 430 are arranged changes in an increasing trend by the electro-optic effect.

By generating the electric fields inside the optical member 410 to change the refractive index of the inside of the optical member 410, it is possible to change a phase of light (incident light LA) that passes through the inside of the optical member 410. The modulation element body 401 of the spatial phase modulation element 400 modulates the phase of the light (incident light LA) incident on the incident plane 411 of the optical member 410 by the potential differences between the second electrodes 430 and the first electrode 420 and emits the emission light LB from the exit plane 412. In the fourth embodiment, it is possible to independently change the potential difference between each second electrode 430 of the plurality of second electrodes 430 and the first electrode 420. The potential differences between the second electrodes 430 and the first electrode 420 occur in a thickness direction of the optical member 410, so that it is possible to decrease voltages (drive voltages) to be applied to the second electrodes 430. It is therefore possible to change the phase of the light (incident light LA) incident on the optical member 410 with high accuracy at a high speed without placing a burden on a drive circuit (not illustrated).

Further, as a result of gaps being provided between the second electrodes 430, at the second polarization portions 418 located at the gaps between the second electrodes 430 in the optical member 410, the electric fields from the second electrodes 430 are difficult to reach, and the refractive index less changes. As described above, the second polarization portions 418 polarize in a direction opposite to the polarization direction of the first polarization portions 417. Thus, even if the electric fields from the second electrodes 430 reach the second polarization portions 418, the refractive index of the second polarization portions 418 changes in a decreasing trend by the electro-optic effect. By this means, the refractive index of the second polarization portions 418 located at the gaps between the second electrodes 430 is relatively lower than the refractive index of the first polarization portions 417 at which the second electrodes 430 are arranged. Thus, the light incident on the second polarization portions 418 located at the gaps between the second electrodes 430 can be made incident on the first polarization portions 417 at which the second electrodes 430 are arranged. It is therefore possible to utilize 100% of the incident light LA, so that it is possible to increase the utilization efficiency of the incident light LA.

The graph indicated in FIG. 15 indicates a distribution of the refractive index of the optical member 410. A horizontal axis and a vertical axis of the graph indicated in FIG. 15 are similar to the horizontal axis and the vertical axis of the graph indicated in FIG. 5. Further, a region of the first polarization portion 417 in which the second electrode 430 on the -X direction side in the optical member 410 is arranged will be referred to as a first region 419A in the optical member 410. A region of the first polarization portion 417 in which the second electrode 430 on the central side in the optical member 410 is arranged will be referred to as a second region 419B in the optical member 410. A region of the first polarization portion 417 in which the second electrode 430 on the +X direction side in the optical member 410 is arranged will be referred to as a third region 419C in the optical member 410.

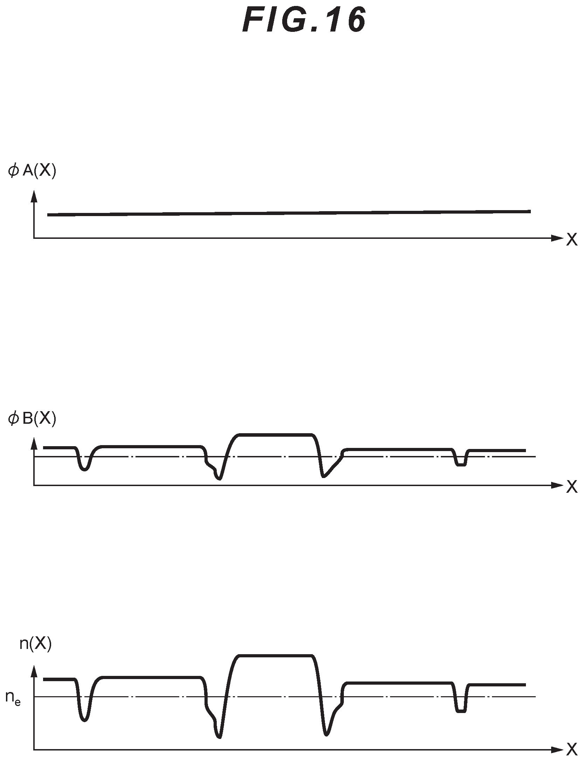

FIG. 16 indicates graphs of a phase distribution of the incident light LA, a phase distribution of the emission light LB, and a distribution of the refractive index of the optical member 410 to compare with each other. A horizontal axis and a vertical axis of the graph indicating the phase distribution of the incident light LA are the same as the horizontal axis and the vertical axis of the graph indicating the phase distribution of the incident light LA in FIG. 6. To facilitate the description, it is assumed that a wavefront of the incident light LA is a flat surface, and the phase distribution of the incident light LA is constant. A horizontal axis and a vertical axis of the graph indicating the phase distribution of the emission light LB are the same as the horizontal axis and the vertical axis of the graph indicating the phase distribution of the emission light LB in FIG. 6. The graph indicating the distribution of the refractive index of the optical member 410 is the same as the graph indicated in FIG. 15.

As described above, the potential differences between the second electrodes 430 and the first electrode 420 can be independently changed. As can be seen from the graph indicating the distribution of the refractive index of the optical member 410 in FIG. 15 and FIG. 16, the refractive index of the first region 419A, the refractive index of the second region 419B, and the refractive index of the third region 419C in the optical member 410 independently change depending on the potential difference between each second electrode 430 of the plurality of second electrodes 430 and the first electrode 420. For example, in the first region 419A, in a process of the electric fields being directed from the second electrodes 430 to the first electrode 420, the refractive index of the first region 419A changes in an increasing trend by the electro-optic effect. In the second region 419B, in a process of the electric fields being directed from the second electrodes 430 to the first electrode 420, the refractive index of the second region 419B changes in an increasing trend by the electro-optic effect. In the third region 419C, in a process of the electric fields being directed from the second electrodes 430 to the first electrode 420, the refractive index of the third region 419C changes in an increasing trend by the electro-optic effect.

Further, the second polarization portions 418 located at the gaps between the second electrodes 430 polarize in a direction opposite to the polarization direction of the first polarization positions 417. For example, in the second polarization portion 418 located at the gap between the first region 419A and the second region 419B, the electric fields from the second electrodes 430 reach the second polarization portion 418, and the refractive index of the second polarization portion 418 changes in a decreasing trend by the electro-optic effect. In the second polarization portion 418 located at the gap between the second region 419B and the third region 419C, the electric fields from the second electrodes 430 reach the second polarization portion 418, and the refractive index of the second polarization portion 418 changes in a decreasing trend by the electro-optic effect.

Thus, as can be seen from the graph indicating the phase distribution of the emission light LB in FIG. 16, for example, a phase of light LA1 incident on the first region 419A changes according to the refractive index of the first region 419A. A phase of light LA2 incident on the second region 419B changes according to the refractive index of the second region 419B. A phase of light LA3 incident on the third region 419C changes according to the refractive index of the third region 419C. This makes it possible to change the phase of the light (incident light LA) incident on the optical member 410 with high accuracy at a high speed.

Further, for example, light LA6 incident on a portion (second polarization portion 418) of a gap adjacent to the first region 419A on the -X direction side can be made incident on the first region 419A (or a region on an opposite side of the first region 419A). Light LA7 incident on a portion (second polarization portion 418) of a gap between the first region 419A and the second region 419B can be made incident on the first region 419A or the second region 419B. Light LA8 incident on a portion (second polarization portion 418) of a gap between the second region 419B and the third region 419C can be made incident on the second region 419B or the third region 419C. Light LA9 incident on a portion (second polarization portion 418) of a gap adjacent to the third region 419C on the +X direction side can be made incident on the third region 419C (or a region on an opposite side of the third region 419C). This makes it possible to increase the utilization efficiency of the incident light LA.

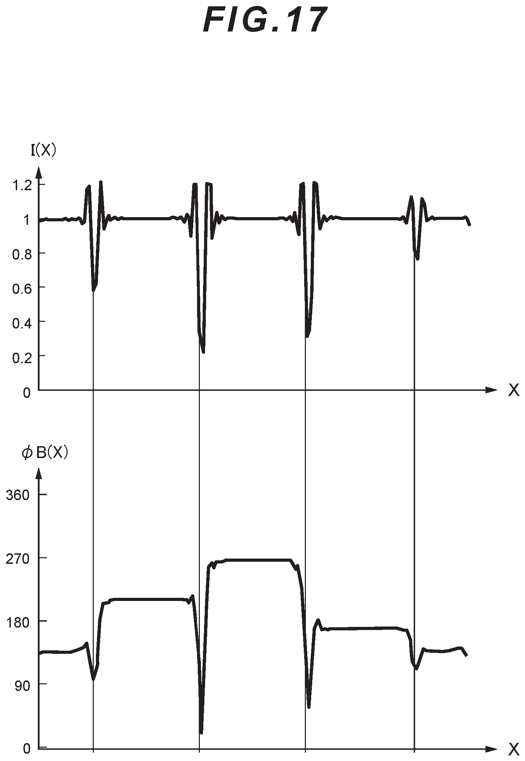

FIG. 17 indicates graphs of a light intensity distribution of the emission light LB and the phase distribution of the emission light LB to compare with each other. The graph indicated in FIG. 17 indicates a specific example in a case where the optical member 410 is formed using lithium niobate (LiNbO₃). A horizontal axis and a vertical axis of the graph indicating the light intensity distribution of the emission light LB are the same as the horizontal axis and the vertical axis of the graph indicating the light intensity distribution of the emission light LB in FIG. 7. A horizontal axis and a vertical axis of the graph indicating the phase distribution of the emission light LB are the same as the horizontal axis and the vertical axis of the graph indicating the phase distribution of the emission light LB in FIG. 7.

Further, a thickness (crystal thickness) of the optical member 410 is set at 0.2 mm. A length (interaction distance) in the Y direction of the optical member 410 is set at 20 mm. A pitch between the second electrodes 430 is set at 1 mm. A width of the second electrode 430 is set at 0.9 mm. A voltage application direction is set at the Z direction. A voltage to be applied to the second electrode 430 in the first region 419A is set at 9 V, a voltage to be applied to the second electrode 430 in the second region 419B is set at 15 V, and a voltage to be applied to the second electrode 430 in the third region 419C is set at 4.5 V. A width of the second polarization portion 418 is set at 50 µm. A wavelength of the incident light is set at 633 nm. It is assumed that the incident light is a Gaussian beam diffracted by a slit having a thickness of 100 µm (1/e²).

Further, long vertical lines in the graph indicated in FIG. 17 indicate central positions in the X direction of the gaps between the second electrodes 430. It can be seen from FIG. 17 that the optical member 410 has a polarization reversal structure, and thus, phase change among the first to the third regions 419A to 419C can be separated by clear boundaries, so that a phase distribution having high separability can be implemented.

### [Feature Configuration of Fourth Embodiment]

The spatial phase modulation element 400 according to the fourth embodiment includes the first electrode 420 provided on the first side surface 413 in the optical member 410, and the plurality of second electrodes 430 provided on the second side surface 414 on the opposite side of the first side surface 413 in the optical member 410, and is capable of independently generating a potential difference between each second electrode 430 of the plurality of second electrodes 430 and the first electrode 420. The potential differences between the second electrodes 430 and the first electrode 420 occur in a thickness direction of the optical member 410, so that it is possible to decrease voltages (drive voltages) to be applied to the second electrodes 430. It is therefore possible to change the phase of the light (incident light LA) incident on the optical member 410 with high accuracy at a high speed without placing a burden on a drive circuit (not illustrated).

Further, the optical member 410 includes the first polarization portions 417 at which the second electrodes 430 are provided, and the second polarization portions 418 that polarize in a direction (specifically, an opposite direction) different from the polarization direction of the first polarization portions 417. Thus, the electric fields from the second electrodes 430 reach the second polarization portions 418, and the refractive index of the second polarization portions 418 changes in a decreasing trend by the electro-optic effect. By this means, the refractive index of the second polarization portions 418 located at the gaps between the second electrodes 430 becomes relatively lower than the refractive index of the first polarization portions 417 at which the second electrodes 430 are arranged. Thus, the light incident on the second polarization portions 418 located at the gaps between the second electrodes 430 can be made incident on the first polarization portions 417 at which the second electrodes 430 are arranged. It is therefore possible to utilize 100% of the incident light LA, so that it is possible to increase the utilization efficiency of the incident light LA.

In the fourth embodiment described above, the optical member 410 may include a slab waveguide provided so that the light (incident light LA) incident from the incident plane 411 passes through the inside of the optical member 410.

While in the fourth embodiment described above, the first electrode 420 is formed to extend over the entire first side surface 413, the present invention is not limited to this. For example, a plurality of the first electrodes may be arranged at portions located on an opposite side of the second electrodes 430 on the first side surface 413 in an array direction (X direction) that is the same as the array direction of the second electrodes 430.

### [Fifth Embodiment]

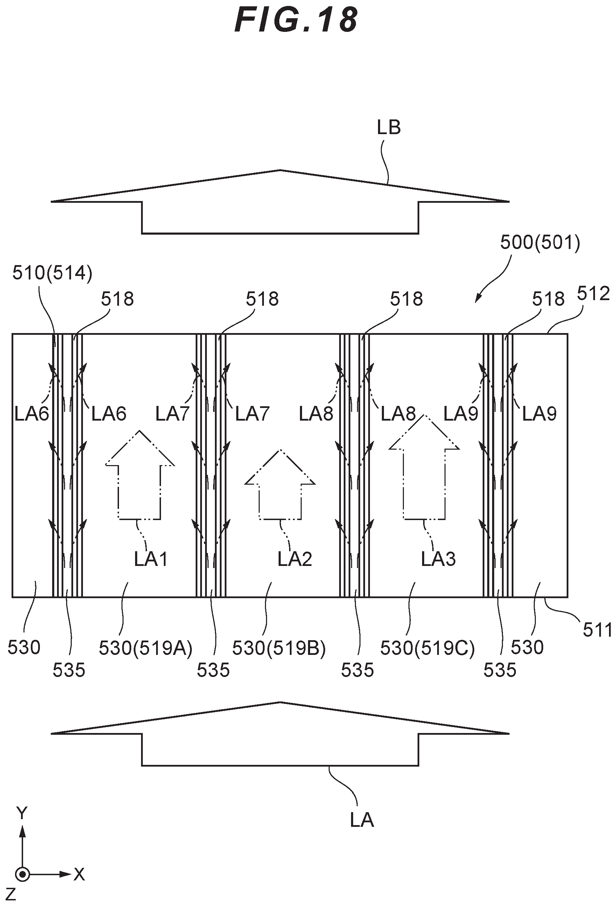

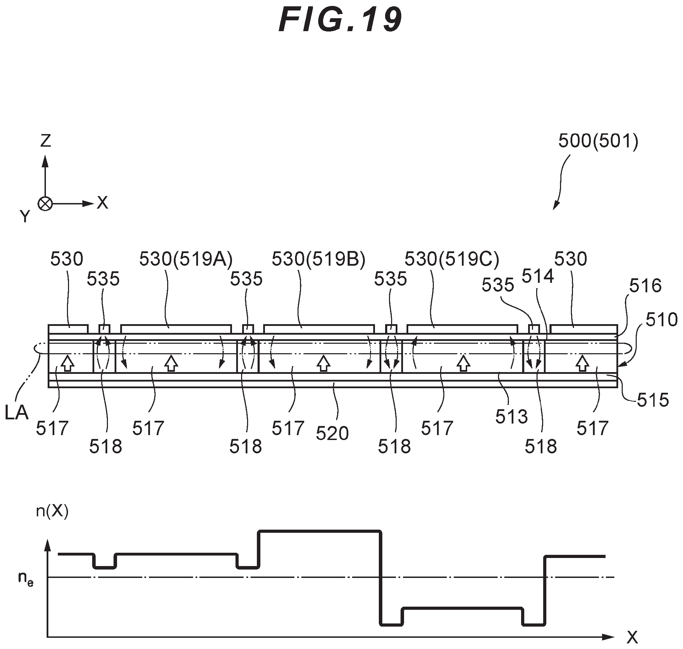

Next, a spatial phase modulation element according to a fifth embodiment will be described. The spatial phase modulation element according to the fifth embodiment has a configuration similar to the configuration of the spatial phase modulation element 50 according to the first embodiment except the modulation element body. Thus, in the fifth embodiment, only the modulation phase body of the spatial phase modulation element will be described. As illustrated in FIG. 18 and FIG. 19, a modulation element body 501 of a spatial phase modulation element 500 according to the fifth embodiment includes an optical member 510, a first electrode 520, a plurality of second electrodes 530, and a plurality of third electrodes 535. The modulation element body 501 modulates a phase of slit-like incident light LA formed to have a flat oval cross-sectional shape and emits the phase-modulated light.

In the fifth embodiment, directions indicated by respective arrows in FIG. 18 and FIG. 19 may be referred to as an X direction, a Y direction, and a Z direction. The X direction, the Y direction, and the Z direction are directions orthogonal to each other.

The optical member 510 is formed in a similar manner to the optical member 410 according to the fourth embodiment. An incident plane 511 is formed at one end portion (in the -Y direction) of the optical member 510. The slit-like incident light LA (having an oval cross-sectional shape) that travels in the +Y direction is incident on the incident plane 511 as the incident light. An exit plane 512 is formed at an end portion (in the +Y direction) on the opposite side of the incident plane 511 in the optical member 510. Light incident on the inside of the optical member 510 from the incident plane 511 is emitted from the exit plane 512.

A first electrode 520 is provided on a first side surface 513 extending from the incident plane 511 to the exit plane 512 in the optical member 510. The first electrode 520 is formed in a similar manner to the first electrode 120 according to the first embodiment. A first insulating layer 515 is formed between the first side surface 513 and the first electrode 520. The first insulating layer 515 is formed in a similar manner to the first insulating layer 115 according to the first embodiment.

A second electrode 530 is provided on a second side surface 514 on an opposite side (+Z direction side) of the first side surface 513 in the optical member 510. The second electrode 530 is formed in a similar manner to the second electrode 130 according to the first embodiment. A plurality of the second electrodes 530 is arranged in an array direction (X direction) perpendicular to an extending direction of the second side surface 514. Note that an extending direction of the first side surface 513, which connects the incident plane 511 and the exit plane 512 may be also referred to as a predetermined direction. The plurality of second electrodes 530 may be arranged in an array direction (X direction) perpendicular to the predetermined direction.

Third electrodes 535 capable of independently applying voltages to the respective gaps between the second electrodes 530 on the second side surface 514 are provided. The third electrode 535 is formed to have a width narrower than a width of the second electrode 530, for example, using a metal material including gold

(Au). The third electrodes 535 are formed to extend in parallel to the second electrodes 530 in the Y direction from one end side to the other end side of the second side surface 514.

A second insulating layer 516 is formed between the second side surface 514, and the plurality of second electrodes 530 and the plurality of third electrodes 535. The second insulating layer 516 is formed in a similar manner to the second insulating layer 116 according to the first embodiment.

The optical member 510 has a polarization reversal structure in a similar manner to the optical member 410 according to the fourth embodiment. A plurality of first polarization portions 517 extending in the Y direction and a plurality of second polarization portions 518 extending in the Y direction adjacent to the first polarization portions 517 are alternately provided along the X direction (the array direction that is the same as the array direction of the second electrodes 530) in the optical member 510. The second polarization portions 518 polarize in a direction (specifically, an opposite direction) different from the polarization direction of the first polarization portions 517.

The first electrode 520 is provided across portions at which the first polarization portions 517 are located and portions at which the second polarization portions 518 are located on the first side surface 513. Further, the second electrodes 530 are provided at portions at which the first polarization portions 517 are located on the second side surfaced 514. The second electrodes 530 are formed to extend in parallel to the Y direction from one end side to the other end side of the first polarization portions 517 at the portions at which the first polarization portions 517 are located on the second side surface 514. The third electrodes 535 are provided at the respective portions at which the second polarization portions 518 are located on the second side surface 514. At the portions at which the second polarization portions 518 are located on the second side surface 514, the third electrodes 535 are formed to extend in parallel to the Y direction from one end side to the other end side of the second polarization portions 518.

The plurality of second electrodes 530 and the plurality of third electrodes 535 are electrically connected to a plurality of second probes 62 on a wiring substrate 60 grouped for each respective second electrode 530 and each third electrode 535. As described above, the plurality of second probes 62 is electrically connected to a drive circuit (not illustrated). The plurality of second probes 62 grouped for each respective second electrode 530 and each third electrode 535 independently applies voltages supplied from the drive circuit to the plurality of second electrodes 530 and the plurality of third electrodes 535. By the voltages being applied to the second electrodes 530 via the second probes 62, potential differences can be provided between the second electrodes 530 and the first electrode 520 arranged across the optical member 510. Further, by the voltages being applied to the third electrodes 535 via the second probes 62, potential differences can be provided between the third electrodes 535 and the first electrode 520 arranged across the optical member 510.

In the modulation element body 501 of the spatial phase modulation element 500 configured as described above, as illustrated in FIG. 18 and FIG. 19, slit-like incident light LA (having an oval cross-sectional shape) is incident on the incident plane 511 of the optical member 510 as the incident light. If positive voltages are applied to the second electrodes 530, potential differences occur between the second electrodes 530 and the first electrode 520 arranged across the optical member 510, and electric fields from the second electrodes 530 toward the first electrode 520 are generated inside the optical member 510. On the other hand, if negative voltages are applied to the second electrodes 530, potential differences occur between the second electrodes 530 and the first electrode 520 arranged across the optical member 510, and electric fields from the first electrode 520 toward the second electrodes 530 are generated inside the optical member 510.

Further, if positive voltages are applied to the third electrodes 535, potential differences occur between the third electrodes 535 and the first electrode 520 arranged across the optical member 510, and electric fields from the third electrodes 535 toward the first electrode 520 are generated inside the optical member 510. On the other hand, if negative voltages are applied to the third electrodes 535, potential differences occur between the third electrodes 535 and the first electrode 520 arranged across the optical member 510, and electric fields from the first electrode 520 toward the third electrodes 535 are generated inside the optical member 510.

As described above, the optical member 510 has a polarization reversal structure. In FIG. 19, a direction of polarization (crystal orientation) in the first polarization portions 517 of the optical member 510 is schematically indicated by a thick arrow. The direction of the polarization in the first polarization portions 517 is a direction (+Z direction) from the first side surface 513 toward the second side surface 514. By this means, in a process of the electric fields being directed from the second electrodes 530 to the first electrode 520, the refractive index of the first polarization portions 517 at which the second electrodes 530 are arranged changes in an increasing trend by the electro-optic effect. On the other hand, in a process of the electric fields being directed from the first electrode 520 to the second electrodes 530, the refractive index of the first polarization portions 517 at which the second electrodes 530 are arranged changes in a decreasing trend by the electro-optic effect.

Further, the second polarization portions 518 polarize in a direction opposite to the polarization direction of the first polarization portions 517. By this means, in a process of the electric fields being directed from the third electrodes 535 to the first electrode 520, the refractive index of the second polarization portions 518 at which the third electrodes 535 are arranged changes in a decreasing trend by the electro-optic effect. On the other hand, in a process of the electric fields being directed from the first electrode 520 to the third electrodes 535, the refractive index of the second polarization portions 518 at which the third electrodes 535 are arranged changes in an increasing trend by the electro-optic effect.

By generating the electric fields inside the optical member 510 to change the refractive index of the inside of the optical member 510, it is possible to change the phase of the light (incident light LA) that passes through the inside of the optical member 510. The modulation element body 501 of the spatial phase modulation element 500 modulates the phase of the light (incident light LA) incident on the incident plane 511 of the optical member 510 by the potential differences between the second electrodes 530 and the first electrode 520 (and the potential differences between the third electrodes 535 and the first electrode 520) and emits the emission light LB from the exit plane 512. In the fifth embodiment, it is possible to independently change the potential difference between each second electrode 530 of the plurality of second electrodes 530 and the first electrode 520. The potential differences between the second electrodes 530 and the first electrode 520 occur in a thickness direction of the optical member 510, so that it is possible to decrease voltages (drive voltages) to be applied to the second electrode 530. It is therefore possible to change the phase of the light (incident light LA) incident on the optical member 510 with high accuracy at a high speed without placing a burden on a drive circuit (not illustrated).

Further, the third electrodes 535 are provided at the second polarization portions 518 located at the gaps between the second electrodes 530 in the optical member 510, and the potential differences between the third electrodes 535 and the first electrode 520 can be independently changed. By generating the electric fields from the third electrodes 535 toward the first electrode 520 to lower the refractive index of the second polarization portions 518 at which the third electrodes 535 are arranged, light incident on the second polarization portions 518 at which the third electrodes 535 are arranged can be made incident on the first polarization portions 517 at which the second electrodes 530 are arranged. It is therefore possible to utilize 100% of the incident light LA, so that it is possible to increase the utilization efficiency of the incident light LA. Further, as a result of the refractive index of the second polarization portions 518 at which the third electrodes 535 are arranged being lowered, the refractive index of the first polarization portions 517 at which the second electrodes 530 are arranged can be lowered, so that it is possible to expand a range in which the phase of the light (incident light LA) incident on the optical member 510 can be changed while increasing the utilization efficiency of the incident light LA.

The graph indicated in FIG. 19 indicates a distribution of the refractive index of the optical member 510. A horizontal axis and a vertical axis of the graph indicated in FIG. 19 are similar to the horizontal axis and the vertical axis of the graph indicated in FIG. 5. Further, a region of the first polarization portion 517 at which the second electrode 430 on the -X direction side in the optical member 510 is arranged will be referred to as a first region 519A in the optical member 510. A region of the first polarization portion 517 at which the second electrode 530 on the central side in the optical member 510 is arranged will be referred to as a second region 519B in the optical member 510. A region of the first polarization portion 517 at which the second electrode 530 on the +X direction side in the optical member 510 is arranged will be referred to as a third region 519C in the optical member 510.

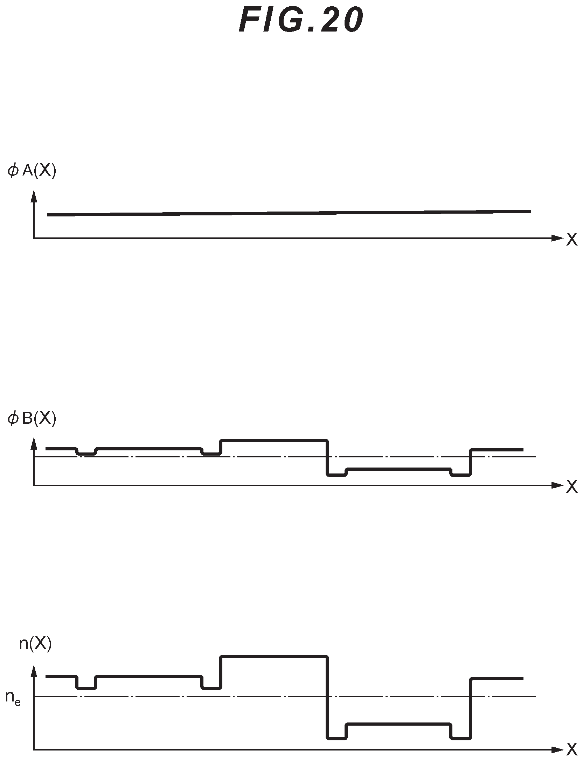

FIG. 20 indicates graphs of a phase distribution of the incident light LA, a phase distribution of the emission light LB, and a distribution of the refractive index of the optical member 510 to compare with each other. A horizontal axis and a vertical axis of the graph indicating the phase distribution of the incident light LA are the same as the horizontal axis and the vertical axis of the graph indicating the phase distribution of the incident light LA in FIG. 6. To facilitate the description, it is assumed that a wavefront of the incident light LA is a flat surface, and the phase distribution of the incident light LA is constant. A horizontal axis and a vertical axis of the graph indicating the phase distribution of the emission light LB are the same as the horizontal axis and the vertical axis of the graph indicating the phase distribution of the emission light LB in FIG. 6. The graph indicating the distribution of the refractive index of the optical member 510 is the same as the graph indicated in FIG. 19.

As described above, the potential differences between the second electrodes 530 and the first electrode 520 can be independently changed. As can be seen from the graph indicating the distribution of the refractive index of the optical member 510 in FIG. 19 and FIG. 20, the refractive index of the first region 519A, the refractive index of the second region 519B, and the refractive index of the third region 519C in the optical member 510 independently change depending on the potential difference between each second electrode 530 of the plurality of second electrodes 530 and the first electrode 520. For example, in the first region 519A, in a process of the electric fields being directed from the second electrodes 530 to the first electrode 520, the refractive index of the first region 519A changes in an increasing trend by the electro-optic effect. In the second region 519B, in a process of the electric fields being directed from the second electrodes 530 to the first electrode 520, the refractive index of the second regions 519B changes in an increasing trend by the electro-optic effect. In the third region 519C, in a process of the electric fields being directed from the first electrode 520 to the second electrodes 530, the refractive index of the third region 519C changes in a decreasing trend by the electro-optic effect.

Further, the potential differences between the third electrodes 535 and the first electrode 520 can be independently changed. For example, in the second polarization portion 518 located at a gap between the first region 519A and the second region 519B, in a process of the electric fields being directed from the first electrode 520 to the third electrodes 535, the refractive index of the second polarization portions 518 changes in an increasing trend by the electro-optic effect to such an extent that it does not exceed the refractive indexes of the first region 519A and the second region 519B. In the second polarization portion 518 located at a gap between the second region 519B and the third region 519C, in a process of the electric fields being directed from the third electrodes 535 to the first electrode 520, the refractive index of the second polarization portions 518 changes in a decreasing trend by the electro-optic effect so as to be lower than the refractive indexes of the second region 219B and the third region 219C.

Thus, as can be seen from the graph indicating the phase distribution of the emission light LB in FIG. 20, for example, a phase of light LA1 incident on the first region 519A changes according to the refractive index of the first region 519A. A phase of light LA2 incident on the second region 519B changes according to the refractive index of the second region 519B. A phase of light LA3 incident on the third region 519C changes according to the refractive index of the third region 519C. This makes it possible to change the phase of the light (incident light LA) incident on the optical member 510 with high accuracy at a high speed.

Further, for example, light LA6 incident on a portion (second polarization portion 518) of a gap adjacent to the first region 519A on the -X direction side can be made incident on the first region 519A (or a region on an opposite side of the first region 519A). Light LA7 incident on a portion (second polarization portion 518) of a gap between the first region 519A and the second region 519B can be made incident on the first region 519A or the second region 519B. Light LA8 incident on a portion (second polarization portion 518) of a gap between the second region 519B and the third region 519C can be made incident on the second region 519B or the third region 519C. Light LA9 incident on a portion (second polarization portion 518) of a gap adjacent to the third region 519C on the +X direction side can be made incident on the third region 519C (or a region on an opposite side of the third region 519C). This can increase the utilization efficiency of the incident light LA.

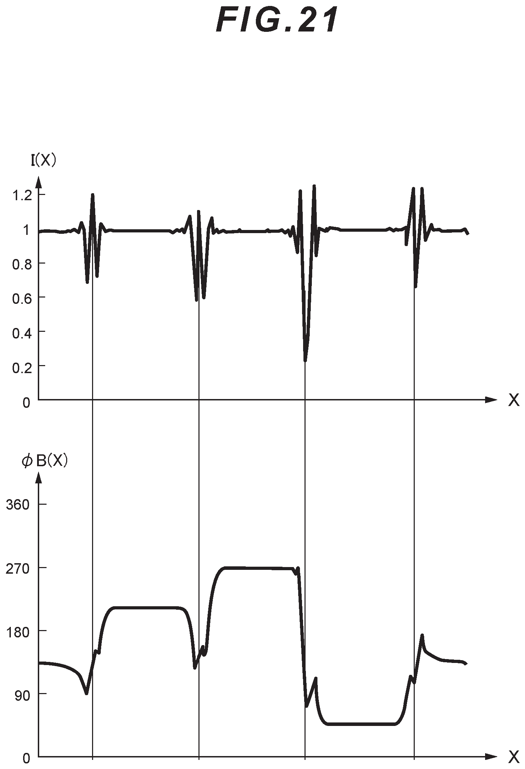

FIG. 21 indicates graphs of a light intensity distribution of the emission light LB and a phase distribution of the emission light LB to compare with each other. The graph indicated in FIG. 21 indicates a specific example in a case where the optical member 510 is formed using lithium niobate (LiNbO₃). A horizontal axis and a vertical axis of the graph indicating the light intensity distribution of the emission light LB are the same as the horizontal axis and the vertical axis of the graph indicating the light intensity distribution of the emission light LB in FIG. 7. A horizontal axis and a vertical axis of the graph indicating the phase distribution of the emission light LB are the same as the horizontal axis and the vertical axis of the graph indicating the phase distribution of the emission light LB in FIG. 7.

Further, a thickness (crystal thickness) of the optical member 510 is set at 0.2 mm. A length (interaction distance) in the Y direction of the optical member 510 is set at 20 mm. A pitch between the second electrodes 530 is set at 1 mm. A width of the second electrode 530 is set at 0.9 mm. A voltage application direction is set at the Z direction. A voltage to be applied to the second electrode 530 in the first region 519A is set at 9 V, a voltage to be applied to the second electrode 530 in the second region 519B is set at 15 V, and a voltage to be applied to the second electrode 530 in the third region 519C is set at -9 V. A width of the second polarization portion 518 is set at 50 µm. A width of the third electrode 535 is set at 20 µm. A voltage to be applied to the third electrode 535 of the second polarization portion 518 adjacent to the first region 519A on the -X direction side is set at -13.5 V, and a voltage to be applied to the second polarization portion 518 located at a gap between the first region 519A and the second region 519B is set at -31.5 V. A voltage to be applied to the third electrode 535 of the second polarization portion 518 located at a gap between the second region 519B and the third region 519C is set at +13.5 V, and a voltage to be applied to the third electrode 535 of the second polarization portion 518 adjacent to the third region 519C on the +X direction side is set at +13.5 V. A wavelength of the incident light is set at 633 nm. It is assumed that the incident light is a Gaussian beam diffracted by a slit having a thickness of 100 µm (1/e²).

Further, long vertical lines in the graph indicated in FIG. 21 indicate central positions in the X direction of the gaps between the second electrodes 530. It can be seen from FIG. 21 that the optical member 510 has a polarization reversal structure, and thus, phase change among the first to the third regions 519A to 519C can be separated by clear boundaries, so that a phase distribution having high separability can be implemented. Further, the refractive index of the second polarization portions 518 can be changed by the voltages being applied to the third electrodes 535 of the second polarization portions 518, so that it is possible to reduce fluctuation of light intensity in the second polarization portions 518 (at the boundaries among the first to the third regions 519A to 519C).

### [Feature Configuration of Fifth Embodiment]

The spatial phase modulation element 500 according to the fifth embodiment includes the first electrode 520 provided on the first side surface 513 in the optical member 510, and the plurality of second electrodes 530 provided on the second side surface 514 on an opposite side of the first side surface 513 in the optical member 510, and is capable of independently generating the potential difference between each second electrode 530 of the plurality of second electrodes 530 and the first electrode 520. The potential differences between the second electrodes 530 and the first electrode 520 occur in a thickness direction of the optical member 510, so that it is possible to decrease voltages (drive voltages) to be applied to the second electrodes 530. It is therefore possible to change the phase of the light (incident light LA) incident on the optical member 510 with high accuracy at a high speed without placing a burden on a drive circuit (not illustrated).

Further, the optical member 510 includes the first polarization portions 517 at which the second electrodes 530 are provided, and the second polarization portions 518 that polarize in a direction (specifically, an opposite direction) different from the polarization direction of the first polarization portions 517. Still further, the third electrodes 535 are provided at the second polarization portions 518, and the potential differences between the third electrodes 535 and the first electrode 520 can be independently changed. By generating the electric fields from the third electrodes 535 toward the first electrode 520 to lower the refractive index of the second polarization portions 518 at which the third electrodes 535 are arranged, light incident on the second polarization portions 518 at which the third electrodes 535 are arranged can be made incident on the first polarization portions 517 at which the second electrodes 530 are arranged. It is therefore possible to utilize 100% of the incident light LA, so that it is possible to increase the utilization efficiency of the incident light LA. Further, as a result of the refractive index of the second polarization portions 518 at which the third electrodes 535 are arranged being lowered, the refractive index of the first polarization portions 517 at which the second electrodes 530 are arranged can be lowered, so that it is possible to expand a range in which the phase of the light (incident light LA) incident on the optical member 510 can be changed while increasing the utilization efficiency of the incident light LA.

In the fifth embodiment described above, the optical member 510 may include a slab waveguide provided so that the light (incident light LA) incident from the incident plane 511 passes through the inside of the optical member 510.

While in the fifth embodiment described above, the first electrode 520 is formed to extend over the entire first side surface 513, the present invention is not limited to this. For example, a plurality of the first electrodes may be arranged at portions located on an opposite side of the second electrodes 530 on the first side surface 513 and at portions located on an opposite side of the third electrodes 535 on the first side surface 513 in an array direction (X direction) that is the same as the array direction of the second electrodes 530 (or the third electrodes 535).

### EXPLANATION OF NUMERALS AND CHARACTERS

- 1: Spatial phase modulator
- 50: Spatial phase modulation element (first embodiment)
- 101: Modulation element body
- 110: Optical member
- 111: Incident plane
- 112: Exit plane
- 113: First side surface
- 114: Second side surface
- 120: First electrode
- 130: Second electrode
- 200: Spatial phase modulation element (second embodiment)
- 201: Modulation element body
- 210: Optical member
- 211: Incident plane
- 212: Exit plane
- 213: First side surface
- 214: Second side surface
- 220: First electrode
- 230: Second electrode
- 235: Third electrode
- 300: Spatial phase modulation element (third embodiment)
- 301: Modulation element body
- 310: Optical member
- 311: Incident plane
- 312: Exit plane
- 313: First side surface
- 314: Second side surface
- 317: Optical waveguide
- 320: First electrode
- 330: Second electrode
- 400: Spatial phase modulation element (fourth embodiment)
- 401: Modulation element body
- 410: Optical member
- 411: Incident plane
- 412: Exit plane
- 413: First side surface
- 414: Second side surface
- 417: First polarization portion
- 418: Second polarization portion
- 420: First electrode
- 430: Second electrode
- 500: Spatial phase modulation element (fifth embodiment)
- 501: Modulation element body
- 510: Optical member
- 511: Incident plane
- 512: Exit plane
- 513: First side surface
- 514: Second side surface
- 517: First polarization portion
- 518: Second polarization portion
- 520: First electrode
- 530: Second electrode
- 535: Third electrode

## Claims

1. A spatial phase modulation element comprising:
an optical member formed using a ferroelectric material having translucency;
a first electrode provided on a first side surface extending in a predetermined direction that connects an incident plane and an exit plane of light in the optical member; and
a second electrode provided on a second side surface on an opposite side of the first side surface in the optical member,
the spatial phase modulation element being capable of changing a phase of light that passes through the optical member by generating a potential difference between the second electrode and the first electrode to change a refractive index of the optical member, wherein
a plurality of the second electrodes is arranged in an array direction perpendicular to the predetermined direction, and
the spatial phase modulation element is capable of independently generating a potential difference between each second electrode of the plurality of second electrodes and the first electrode.

2. The spatial phase modulation element according to claim 1, wherein a gap is provided between the second electrodes.

3. The spatial phase modulation element according to claim 2, comprising:
a third electrode provided at the gap between the second electrodes on the second side surface,
wherein the spatial phase modulation element is capable of generating a potential difference between the third electrode and the first electrode.

4. The spatial phase modulation element according to claim 1 or 2, wherein
the optical member comprises:
a first polarization portion that extends from the incident plane to the exit plane; and
a second polarization portion that extends from the incident plane to the exit plane with a width in the array direction smaller than a width of the first polarization portion, and polarizes in a direction different from a polarization direction of the first polarization portion,
a plurality of the first polarization portions and a plurality of the second polarization portions are provided, the first polarization portions and the second polarization portions being alternately arranged adjacent to one another in the array direction, and
the second electrode is provided at a portion at which the first polarization portion is located on the second side surface.

5. The spatial phase modulation element according to claim 4, comprising:
a third electrode provided at a portion at which the second polarization portion is located on the second side surface,
wherein the spatial phase modulation element is capable of generating a potential difference between the third electrode and the first electrode.

6. The spatial phase modulation element according to claim 2, wherein
an optical waveguide extending from the incident plane to the exit plane is provided at a portion between the second electrode and the first electrode inside the optical member, and
a refractive index of the optical waveguide is higher than a refractive index of a portion located at the gap between the second electrodes in the optical member.

7. A spatial phase modulator comprising:
a plurality of the spatial phase modulation elements according to any one of claims 1 to 6,
wherein the plurality of spatial phase modulation elements is arranged along a direction from the first side surface toward the second side surface.

8. An optical modulator that modulates incident light based on a signal from a drive circuit and emits the modulated light, the optical modulator comprising:
a substrate of a ferroelectric optical crystal on which the incident light that travels along a first axis is incident; and
electrodes arranged on two facing surfaces of the substrate along a second axis intersecting with the first axis, wherein
the substrate of the ferroelectric optical crystal has a periodically poled structure in which polarization alternately changes along the second axis,
electrodes arranged on one surface between the two surfaces include:
a plurality of pixel electrodes arranged along the second axis; and
a plurality of control electrodes arranged between the pixel electrodes,
the pixel electrodes change a refractive index by electric fields generated in a ferroelectric optical crystal by applying voltages between the pixel electrodes and an electrode on a surface facing the pixel electrodes and modulate light by interaction with light that has passed through an inside of the ferroelectric optical crystal, and
the control electrodes are controlled independently from control of the voltages of the pixel electrodes by the drive circuit.

9. The optical modulator according to claim 8, wherein
the periodically poled structure on the substrate of the ferroelectric optical crystal includes a plurality of regions with directions of polarization different from each other, and
the plurality of pixel electrodes and the plurality of control electrodes are provided at positions different from boundaries of the plurality of regions.

10. The optical modulator according to claim 9, wherein one of the plurality of pixel electrodes changes a refractive index in one of the plurality of regions of the periodically poled structure.

11. The optical modulator according to any one of claims 8 to 10, wherein a width of the control electrodes in a direction along the second axis is narrower than a width of the pixel electrodes in the direction along the second axis.
